(19) Europäisches Patentamt
European Patent Office
Office européen des brevets

(11) EP 1 416 487 B1

(12) **EUROPEAN PATENT SPECIFICATION**

(45) Date of publication and mention of the grant of the patent:
**10.10.2007 Bulletin 2007/41**

(51) Int Cl.:
***G11B 20/10*** *(2006.01)* ***G11B 7/125*** *(2006.01)*
***G11B 7/0045*** *(2006.01)*

(21) Application number: **03254643.4**

(22) Date of filing: **25.07.2003**

(54) **Optical disk apparatus and phase adjustment method**

Optischer Plattenapparat und Verfahren zur Phasenjustierung

Appareil à disque optique et procédé d'étalonnage de phase

(84) Designated Contracting States:
**DE FR GB**

(30) Priority: **29.10.2002 JP 2002313623**

(43) Date of publication of application:
**06.05.2004 Bulletin 2004/19**

(73) Proprietors:
- **Hitachi, Ltd.
Chiyoda-ku,
Tokyo 101-8010 (JP)**
- **Intersil Corporation
Yokohama-shi,
Kanagawa (JP)**
- **Hitachi-LG Data Storage, Inc.
Tokyo (JP)**

(72) Inventors:
- **Nishimura, Koichiro
c/o Hitachi, Ltd.
I.P.G.
Tokyo 100-8220 (JP)**
- **Kaku, Toshimitsu
c/o Hitachi, Ltd.
I.P.G.
Tokyo 100-8220 (JP)**

(74) Representative: **Hackney, Nigel John et al
Mewburn Ellis LLP
York House
23 Kingsway
London WC2B 6HP (GB)**

(56) References cited:
**US-B1- 6 414 932**

- **PATENT ABSTRACTS OF JAPAN vol. 2000, no. 24, 11 May 2001 (2001-05-11) & JP 2001 202625 A (TOSHIBA CORP), 27 July 2001 (2001-07-27)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 416 487 B1

Printed by Jouve, 75001 PARIS (FR)

## Description

The present invention relates to a laser drive integrated circuit for generating a write strategy from binary recording signals to be recorded on recording medium and recording clocks for use with an optical disk apparatus having a recording capability, and an optical disk apparatus in which the laser drive integrated circuit is incorporated.

In recent years, an optical disk recording speed has been increased. When modulated data is to be recorded onto an optical disk at high speed, a laser control signal needs to be transmitted to a laser driver in order to implement a write strategy appropriate for the data to be recorded. In a known method for control signal transmission, which is disclosed by JP-A No. 283249/1999 or U.S. Patent No. 6483791, the NRZ signals and recording clock signals derived from data modulation are fed to a laser driver, which then internally generates a write strategy from the NRZ signals and recording clock signals.

FIG. 2 shows an optical disk apparatus that is described in the U.S. Patent No. 6483791. As indicated in this figure, a digital signal processor (hereinafter referred to as a DSP) 203, which contains a signal modulation circuit, generates a recording clock signal (hereinafter referred to as a CLK signal) and NRZ signal from a recording signal that is fed from a host or higher-level device (not shown) . The generated CLK and NRZ signals then enter a laser driver 201, which is mounted above a pickup head (hereinafter referred to as a PUH) 209, via a flexible cable (hereinafter referred to as an FPC) 208. In accordance with the entered NRZ signal, the laser driver 201 records a signal on an optical disk 207 by exercising control in such a manner that a laser diode 205 emits light at a recording power level. When the recorded signal is to be played back, the laser diode 205 is controlled so that it emits light at a playback power level. The emitted light is then reflected by the disk 207, received by a photodetector 206, and subjected to photoelectric conversion. An RF signal is obtained as a result of photoelectric conversion and entered into a read channel circuit 202. The read channel circuit 202 generates a playback clock and NRZ playback signal from the entered RF signal, and enters them into the above-mentioned DSP 203. The DSP 203 demodulates the obtained playback clock and NRZ playback signal into playback data and sends it to the host or other higher-level device (not shown).

FIG. 3 shows an example of a laser driver internal structure that is used within a configuration described in Patent Document 1. A mark/space length detector 301 generates mark/space information (M/S) and pulse width information (Code) from the NRZ signal by using internal clock chCLK, which is synchronized with the CLK by a PLL 302, and sends the generated information to a recording waveform generator block 303 at the next stage. The recording waveform generator block 303 generates the information about recording pulse timing and recording pulse power from the M/S and Code information and sends the generated information to a current control block 304. The current control block 304 generates a recording pulse signal from the information about recording pulse timing and recording pulse power and drives the laser diode 205. All the above blocks are controlled by a control block 305 in the laser driver. The control block 205 is controlled by a controller (which is a microcomputer 204 in the presently described example) in the optical disk apparatus via an interface 306.

United States patent US 6,414,932 describes an information recording/reproducing apparatus which has a laser driver which receives an NRZ binary signal and a clock signal synchronized with the NRZ binary signal from a modulation circuit, and generates a recording current signal corresponding to the NRZ binary signal.

SUMMARY OF THE INVENTION

In the above mark/space length detector 301, the M/S information and Code information are usually generated by strobing the NRZ at a CLK edge. When, for instance, an NRZ rising edge is to be strobed as shown in FIG. 4, it is necessary to provide adequate setup time 3001 for data finalization before a CLK strobe edge and adequate hold time 3002 after a CLK strobe edge for strobing and data acquisition completion. These requirements also apply to cases where an NRZ falling edge is to be strobed. If the provided setup time or hold time is inadequate, the above M/S information and Code information are improperly generated so that incorrect information will be recorded on an optical disk.

Meanwhile, the phase relationship between the NRZ and CLK signals varies with the means of modulation, more specifically, the delay generated by the output of the DSP 203 shown in FIG. 2, and the transmission path to the laser driver, more specifically, the delay generated by the FPC 208 shown in FIG. 2 or the delay generated within the laser driver. When the laser driver is used according to the above method, it is necessary to control the phase relationship between NRZ and CLK so as to provide adequate setup time and hold time during one CLK cycle. The higher the recording speed, the higher the degree of accuracy required for this phase control.

If, for instance, a laser driver providing a setup time of 0. 8 ns and a hold time of 0. 6 ns is used for 10X-speed DVD-R/RW recording, one CLK cycle is 3.8 ns. When the above setup time and hold time are subtracted from 3.8 ns, the resulting value is 2.4 ns. It is necessary to control the phase relationship between NRZ and CLK so that an NRZ edge arrives within a period of 2.4 ns.

Further, the phase relationship between the above NRZ and CLK signals varies with the means of modulation, transmission path, temperature changes arising from the heat generated by the laser driver, temperature changes caused by the surrounding environment for the laser driver, and supply voltage variation. It is therefore necessary to provide an adequate margin for determining the phase relationship between NRZ and CLK.

Preferably, it is therefore an object of the present invention to provide a configuration that is capable of accurately adjusting the phase relationship between NRZ and CLK in such a manner as to afford an adequate margin for the setup time and hold time particularly in situations where the recording speed is increased.

In a first aspect, the invention provides an optical disk apparatus according to claim 1. The apparatus is equipped with a laser driver that generates a drive waveform for driving a laser diode in accordance with the binary recording signal and recording clock signal to be recorded on a recording medium. The optical disk apparatus incorporates two delay circuits: binary recording signal delay circuit and recording clock signal delay circuit. The former delay circuit delays the binary recording signal in accordance with a control signal, whereas the latter delay circuit delays the recording clock signal in accordance with the control signal. The relative timing between the edges of the binary recording signal and recording clock signal can be adjusted by varying the delay amounts provided by the two delay circuits.

The pre-characterising portion of claims 1,3,4 and 5 is based on US 6 414 932.

BRIEF DESCRIPTION OF THE DRAWINGS

FIG. 1 is an internal circuit diagram of a laser driver according to a fourth embodiment of the present invention;
FIG. 2 illustrates the configuration of a conventional optical disk apparatus;
FIG. 3 is an internal block diagram of a conventional laser driver;
FIG. 4 illustrates setup time and hold time;
FIG. 5 illustrates the configuration of an optical disk apparatus according to a first embodiment of the present invention;
FIG. 6 shows operating waveforms according to the first embodiment of the present invention;
FIG. 7 is a flowchart illustrating how the phase relationship between CLK and NRZ is adjusted by the first embodiment of the present invention;
FIG. 8 illustrates the configuration of an optical disk apparatus according to a second embodiment of the present invention;
FIG. 9 is an internal block diagram of a laser driver according to a third embodiment of the present invention;
FIG. 10 is an internal block diagram of an MON1 block for the laser driver shown in FIG. 7;
FIG. 11 shows operating waveforms according to the third embodiment of the present invention;
FIG. 12 is an internal block diagram of a laser driver according to the fourth embodiment of the present invention;
FIG. 13 shows operating waveforms according to the fourth embodiment of the present invention;
FIG. 14 is a flowchart illustrating how the phase relationship between CLK and NRZ is adjusted by the fourth embodiment of the present invention;
FIG. 15 is an internal block diagram of a laser driver according to a fifth embodiment of the present invention;
FIG. 16 is a first flowchart illustrating how the phase relationship between CLK and NRZ is adjusted by the fifth embodiment of the present invention;
FIG. 17 is a second flowchart illustrating how the phase relationship between CLK and NRZ is adjusted by the fifth embodiment of the present invention;
FIG. 18 is a first diagram that shows operating waveforms according to the fifth embodiment of the present invention;
FIG. 19 is a second diagram that shows operating waveforms according to the fifth embodiment of the present invention;
FIG. 20 is a third flowchart illustrating how the phase relationship between CLK and NRZ is adjusted by the fifth embodiment of the present invention;
FIG. 21 is a third diagram that shows operating waveforms according to the fifth embodiment of the present invention;
FIG. 22 is a fourth diagram that shows operating waveforms according to the fifth embodiment of the present invention;
FIG. 23 is a fourth flowchart illustrating how the phase relationship between CLK and NRZ is adjusted by the fifth embodiment of the present invention;
FIG. 24 is a fifth diagram that shows operating waveforms according to the fifth embodiment of the present invention;
FIG. 25 is a sixth diagram that shows operating waveforms according to the fifth embodiment of the present invention;
FIG. 26 is a fifth flowchart illustrating how the phase relationship between CLK and NRZ is adjusted by the fifth embodiment of the present invention;
FIG. 27 is a seventh diagram that shows operating waveforms according to the fifth embodiment of the present invention;
FIG. 28 is an eighth diagram that shows operating waveforms according to the fifth embodiment of the present invention;

FIG. 29 illustrates the configuration of an optical disk apparatus according to a sixth embodiment of the present invention;
FIG. 30 is an internal block diagram of a laser driver according to the sixth embodiment of the present invention;
FIG. 31 is an internal circuit diagram of a laser driver according to a seventh embodiment of the present invention; and
FIG. 32 is an internal block diagram of a laser driver according to an eighth embodiment of the present invention.

DETAILED DESCRIPTION OF THE PREFERRED EMBODIMENTS

The main reference numerals used in the accompanying drawings are: 101, D flip-flop; 201, laser driver; 202, read channel; 203, digital signal processor (DSP); 204, microcomputer; 205, laser diode; 206, photoelectric converter; 207, rewritable optical disk; 208, flexible cable; 301, mark/space length detector; 303, recording waveform generator block; 305, laser driver control block; 306, laser driver control interface block; 401, first variable delay device; 402, second variable delay device; 701, first monitor signal generator circuit; 801, start/stop/reset counter; 1001, second monitor signal generator circuit; 2501, EOR gate circuit; 2701, third variable delay device; 2702, fourth variable delay device; 2801, fifth variable delay device; and 2901, delay control circuit.

The preferred embodiments of the present invention will now be described with reference to the accompanying drawings. FIG. 5 illustrates the configuration of an optical disk apparatus according to a first embodiment of the present invention. Components having the same functions as the counterparts indicated in FIG. 2 are assigned the same reference numerals as the counterparts in FIG. 2 and their description is omitted herein. The reference numerals 401 and 402 in FIG. 5 indicate variable delay devices. These variable delay devices are controlled by a microcomputer 204. The phase relationship between NRZ and CLK is adjusted by varying the amounts of delay provided by these variable delay devices.

The operation performed to adjust the phase relationship between NRZ and CLK according to the present embodiment will now be described with reference to FIGS. 6 and 7. Although there are both rising and falling NRZ edges, only the phase relationship to a rising edge of NRZ is illustrated as a representative within the NRZ/CLK phase relationship drawings referenced from now on. In all the preferred embodiments, including the present embodiment, it is assumed that NRZ data strobing takes place at a rising edge of CLK.

As regards the phase relationship between NRZ and CLK, which are output by a DSP 203 in FIG. 5, it is assumed that synchronization is performed at a falling edge of CLK (in opposite phase with a strobe edge) as indicated in FIG. 6, and that the DSP internally assures that an NRZ edge is timed with a delay of fixed time dT1 after a falling edge of CLK. The NRZ edge relative to CLK is adjusted with the above position regarded as the center.

The phase adjustment operation will now be described with reference to a flowchart in FIG. 7. We define the delay amount Tdl1 for DL1 (401) is 0, and the delay amount Tdl2 for DL2 (402) is Dmax(601), respectively. Further, it is defined that the delay adjustment amount Td = (Dmax - Tdl2) + Tdl1.

With the above settings employed, a "14T - 14T" or other known fixed pattern is recorded on a disk (602). The recorded area is subsequently played back to let the DSP 203 measure bit error Ber (603) . The above operation is repeated (604) by varying the values Tdl1 and Tdl2 (605) to increase the value Td until Tdl1 = Dmax and Tdl2 = 0 (Td = d1). If, for instance, Td = 0, the time interval between an NRZ edge and CLK strobe is shorter than the setup time as indicated in FIG. 6. As regards the value Ber, therefore, an error occurs in a pulse width read inside the laser driver so that a recording error results. Consequently, the resulting playback data exhibits a high bit error rate ("all error") . If Td = d3, on the other hand, no bit error occurs because the setup time and hold time are adequately provided.

Next, a search is conducted to locate a term during which the bit error is smaller than a threshold value Vther (606). Since the bit error within the term between a delay amount of d2 and a delay amount of d4 is smaller than the threshold value Vther (607), the DL1 and DL2 delay amounts are set so that dT = dset = (d2 + d4)/2 (608). The NRZ/CLK phase adjustment is now completed.

For the reasons stated above, the phase relationship between CLK and NRZ, that is, the CLK and NRZ edge time axis positions, can be set at a position furthest from the phase relationship that causes a bit error when the data recorded on a disk is played back. As a result, the above adjustment makes it possible to set the phase relationship between CLK and NRZ at a position that affords an adequate margin for temperature changes in the components of an optical disk apparatus, temperature changes in the area around the components, circuit power supply changes, and jitter-induced changes in the phase relationship between CLK and NRZ signals. A substantial effect can therefore be produced simply by making the above adjustment, for instance, at the time of initial adjustment for an outgoing inspection process.

FIG. 8 illustrates an optical disk apparatus according to a second embodiment of the present invention. Components having the same functions as the counterparts indicated in FIG. 5 are assigned the same reference numerals as the counterparts in FIG. 5 and their description is omitted herein. The optical disk apparatus shown in FIG. 8 differs from the apparatus in FIG. 5 in that the former is provided with an EOR device 2501, which is positioned at a stage subsequent to that of a variable delay device 402 in order to vary the CLK phase. The CLK signal is entered into one input of the EOR device 2501 and a CLK_INV_bit is entered into the other input. When the CLK_INV_bit = 1, the EOR device outputs a CLK2 signal, which is in the same phase as the CLK signal. When the CLK_INV_bit = 0, on the other hand, the EOR device outputs a phase-inverted CLK2 signal.

If, for instance, the phase synchronization between NRZ and CLK outputs from the DSP 203 is achieved at a rising edge of CLK on the contrary to the case shown in FIG. 5 (in phase with a strobe edge), the phase adjustment cannot be made by the method of the first embodiment of the present invention. However, the above EOR circuit can be used to provide phase inversion so that the resulting state is identical with the state provided by the first embodiment. Therefore, the second embodiment produces the same effect as the first embodiment.

FIG. 9 illustrates the configuration of a laser driver according to a third embodiment of the present invention. Components having the same functions as the counterparts shown in FIG. 3 are assigned the same reference numerals as the counterparts in FIG. 3 and their description is omitted herein. Further, since the configuration of the optical disk apparatus is the same as indicated in FIG. 5, its description is omitted herein.

A MON1 block 701 shown in FIG. 9 is a circuit that measures the time difference between an NRZ edge and a CLK edge near the NRZ edge. FIG. 10 shows a circuit configuration example of the MON1 block.

A counter 801, which is shown in FIG. 10, is provided with a start function, a stop function, and a reset function. HiCLK is a clock that a strategy generator block generates with a recording pulse edge adjustment accuracy (one several tenth of a CLK cycle). This clock is used to measure the above time difference. Counted data is sent to the laser driver's controller as a register value and then forward to the microcomputer of the optical disk apparatus via the interface.

The operation performed to adjust the phase relationship between NRZ and CLK according to the present embodiment will now be described with reference to FIG. 11.

As indicated in FIG. 11, data strobing takes place at a rising edge of CLK. Therefore, when NRZ/CLK jittering is taken into consideration, it is necessary to align an NRZ edge with a CLK falling edge.

Thus, the start in FIG. 10 is set at a falling edge of CLK with the reset set at NRZ edges (both rising and falling edges). While the count Cnt prevailing below the CLK cycle level is monitored, the delay amounts provided by the DL1 and DL2 shown in FIG. 5 are adjusted until the count Cnt is close to 0.

The present embodiment not only produces the same effect as in the first and second embodiments of the present invention but also eliminates the necessity for performing a recording/playback operation in relation to the disk. Therefore, unlike the first and second embodiments, the present embodiment can prevent the use of a disk area during adjustment, and reduces the use of disk space for recordings other than data during the use of DVD-R disk or other write-once disk. Further, the present embodiment entails a shorter adjustment period than the first and second embodiments because the present embodiment does not simultaneously perform a recording operation and playback operation. Meanwhile, when bit errors are used as in the first and second embodiments, it is difficult to distinguish between bit errors caused by a disk factor such as flaws or fingerprints on the disk and bit errors causes by phase adjustment. However, the present embodiment does not use a disk factor such as fingerprints. As a result, the present embodiment offers a higher degree of adjustment accuracy than the first and second embodiments, and makes it possible to increase the margin for NRZ and CLK phase errors.

A fourth embodiment of the present invention will now be described. It is assumed that the configuration of an optical disk apparatus of the fourth embodiment is the same as in the first embodiment, which is illustrated in FIG. 5. It is also assumed that a laser driver 201 outputs NRZ/CLK phase adjustment monitor signal CDMON to a microcomputer 204, which controls delay devices 401, 402.

FIG. 12 illustrates the configuration of a laser driver 201 according to the fourth embodiment. Components having the same functions as the counterparts shown in FIG. 3 are assigned the same reference numerals as the counterparts in FIG. 3 and their description is omitted herein. The employed configuration differs from the one in FIG. 3 in that a block 3201, which has the same function as the mark/space length detector 301 in FIG. 3, outputs monitor signal CDMON for NRZ/CLK phase adjustment. As the CDMON signal, a waveform strobed by CLK within the mark/space length detector is output in relation to an entered NRZ signal.

FIG. 13 shows CDMON output waveforms according to the present embodiment. FIG. 14 is a flowchart that illustrates how the variable delay devices 401, 402 make adjustments. The operation performed to adjust the phase relationship between NRZ and CLK according to the present embodiment will now be described with reference to these drawings.

First of all, a known fixed pattern signal is entered into an NRZ input of the laser driver. In the present embodiment, a 5T-5T pattern is entered. Next, the initial delay amounts Tdl1, Tdl2 for the DL1 (401) and DL2 (402) are set so that the delay adjustment amount Td, which is defined in the first embodiment, is 0. In the resulting state, the microcomputer 204 is used to verify that the signal output from the CDMON is not 5T-5T. Subsequently, the delay amounts Tdl1, Tdl2 of the DL1 and DL2 are varied so as to increase the delay adjustment amount Td for the purpose of determining the delay adjustment amount Td = d2 at which the CDMON signal is 5T-5T. The value Td is then increased until the CDMON signal is no longer 5T-5T to determine the delay adjustment amount Td = d3 at which the CDMON signal is no longer 5T-5T. The area between delay adjustment amounts d2 and d3 represents the NRZ/CLK phase relationship that provides correct NRZ data probing. For maximizing the margin for NRZ/CLK phase changes, the delay amounts Tdl1, Tdl2 of the DL1 and DL2 are adjusted until the delay adjustment amount Td satisfies the following equation. When the equation is satisfied, the NRZ/CLK phase adjustment is completed.

$$dT = dset = (d2 + d3)/2$$

The present embodiment produces the same effect as the first to third embodiments of the present invention. Further, unlike the third embodiment, the present embodiment does not require clocks having a frequency that is multiplied by n within the laser driver. Therefore, the present embodiment not only reduces the power consumption required for adjustment but also suppresses the generation of heat. As a result, it makes it possible to avoid PUH case deformation and other problems that may arise from local heat generation by the laser driver within the PUH.

A fifth embodiment of the present invention will now be described. It is assumed that the configuration of an optical disk apparatus of the fifth embodiment is the same as in the first embodiment, which is illustrated in FIG. 5. It is also assumed that a laser driver 201 outputs NRZ/CLK phase adjustment monitor signal SKMON to a microcomputer 204, which controls delay devices 401, 402.

FIG. 15 shows the configuration of a laser driver 201 according to the fifth embodiment. Components having the same functions as the counterparts indicated in FIG. 3 are assigned the same reference numerals as the counterparts in FIG. 3 and their description is omitted herein. The laser driver shown in FIG. 15 differs from the one in FIG. 3 in that the former is additionally provided with block MON2, which generates monitor signal SKMON for NRZ/CLK phase adjustment from NRZ and internal clock chCLK.

FIG. 1 is a circuit diagram that illustrates the above-mentioned MON2 and its peripheral devices. The reference numeral 101 in the figure indicates a D flip-flop 101, which generates monitor signal SKMON for NRZ/CLK phase adjustment.

FIG. 16 is a flowchart that illustrates the NRZ/CLK phase adjustment operation according to the present embodiment. The operation of the present embodiment will now be described with reference to FIG. 16. The present embodiment assumes that NRZ strobing takes place at a rising edge of CLK as is the case with the first embodiment of the present invention.

First of all, the SKMON output is stored (1201) while the delay amounts Tdl1, Tdl2 of the DL1 (401) and DL2 (402), which are defined for the first embodiment, are varied to change the delay adjustment amount Td from 0 to d1 (maximum value). Next, the storage result is checked to determine whether the edge count is 0, 1, 2, or 3 (1202-1204). Subsequently control is exercised as appropriate for the determined edge count (1205-1208).

1. When the edge count is 3 (adjustment 1-1, 1205)

This is a case where the NRZ/CLK delay adjustment width is more than one CLK cycle. The flowchart in FIG. 17 illustrates how the delay adjustment amount Td is adjusted. First, a check is performed to determine whether the second edge is rising or falling (1301).

1.1 When the second edge is falling (1302)

This is a case where the DSP 203 achieves synchronization, as shown in FIG. 18, when the NRZ and CLK phases are falling (in opposite phase with a strobe edge), and the DSP internally assures that an NRZ edge is timed with a delay of fixed time dT2 after a falling edge of CLK. Since the NRZ/CLK phase adjustment is made while the NRZ and CLK phases output by the DSP are handled as start points, the second edge is a falling edge in the above case. In this situation, the purpose is achieved when the NRZ edge is positioned in opposite phase with a clock strobe edge. Therefore, the DL1 and DL2 are adjusted until the following Td value is obtained (1303):

$$Td = dset = (d2 + d4)/2$$

If the guaranteed CLK duty cycle is 50%, the adjustment may be made so as to obtain the following Td value:

$$Td = dset = d3$$

If the setup time Tsu and hold time Thd are known (1304), the DL1 and DL2 delay time values are adjusted, in consideration of the setup time and hold time, until the value Td satisfies the following equation:

$$Td = dset = \{(d2 - Thd) + (d4 - Tsu)\}/2$$

As a result, a greater phase error margin can be provided for the relationship between NRZ and CLK than when the values Tsu and Thd are unknown.

1.2 When the second edge is rising (1305)

This is a case where, as shown in FIG. 19, the DSP 203 achieves synchronization when the NRZ and CLK phases are at a rising edge (in phase with a strobe edge) and the DSP internally assures that an NRZ edge is timed with a delay of fixed time dT3 after a falling edge of CLK. In this situation, the DL1 and DL2 delay amounts are adjusted until the following Td value is obtained so as to align the NRZ edge with a CLK edge that is in opposite phase with a strobe edge:

$$Td = dset = d2 \text{ or } d4$$

2. When the edge count is 2 (adjustment 1-2, 1206)

This is a case where the NRZ/CLK delay adjustment width is less than one CLK cycle. This case applies, for instance, to a situation where the CLK frequency is lower than in case 1. The flowchart in FIG. 20 illustrates how the delay adjustment amount Td is adjusted.

First, a check is performed to determine whether the first edge is rising or falling (1601).

2.1 When the first edge is falling (1602)

This case is similar to case 1.1 as indicated in FIG. 21. Since the NRZ/CLK phase adjustment is made while the NRZ and CLK phases output by the DSP are handled as start points, the first edge is a falling edge. In this situation, the purpose is achieved when the NRZ edge is positioned in opposite phase with a clock strobe edge. Therefore, the DL1 and DL2 delay amounts are adjusted until the following Td value is obtained:

$$Td = dset = d2$$

2.2 When the first edge is rising (1603)

This case is similar to case 1.2 as indicated in FIG. 22. Since the position in opposite phase with a clock strobe edge can be determined in the same manner as described above, the purpose is achieved when the DL1 and DL2 delay amounts are adjusted until the following Td value is obtained:

$$Td = dset = d3$$

3. When the edge count is 1 (adjustment 1-3, 1207)

This is a case where the NRZ/CLK delay adjustment width is less than one CLK cycle as explained in the description of case 2. The flowchart in FIG. 23 illustrates how the delay adjustment amount Td is adjusted. First, a check is performed to determine whether the first edge is rising or falling (1901).

3.1 When the first edge is falling (1902)

This case is similar to case 1.1 as indicated in FIG.

24. Since the position in opposite phase with a clock strobe edge can be determined in the same manner as described above, the purpose is achieved when the DL1 and DL2 delay amounts are adjusted until the following Td value is obtained:

$$Td = dset = d2$$

3.2 When the first edge is rising (1903)

This case is similar to case 1.2 as indicated in FIG. 25. However, the position in opposite phase with a clock strobe edge cannot be determined. Therefore, the distance between the NRZ edge and CLK strobe edge should be maximized. To achieve this purpose, the phase difference between the NRZ edge and CLK strobe edge is determined (1903) when the delay adjustment amount Td = 0 and when Td = d1 (maximum). If the phase difference is greater when Td = 0, the DL1 and DL2 delay amounts are adjusted so that Td = 0. If, on the contrary, the phase difference is greater when Td = d1, the DL1 and DL2 delay amounts are adjusted so that Td = d1.

4. When the edge count is 0 (adjustment 1-4, 1208)

This is a case where the NRZ/CLK delay adjustment width is less than one half of the CLK cycle. The flowchart in FIG. 26 illustrates how the delay adjustment amount Td is adjusted. When the SKMON output is used and the edge is 0, the relationship of the NRZ edge to the CLK edge is unknown. Therefore, the relationship between the NRZ edge and CLK edge is derived from the state (1 or 0) of the SKMON output. The delay adjustment amount is then determined in accordance with the NRZ/CLK edge relationship (2201).

4.1 When SKMON = 1 (2202)

In this case, the range of NRZ edge variation caused by a Td change is positioned after a strobe edge, as indicated in FIG. 27. Therefore, the purpose is achieved when the DL1 and DL2 delay amounts are adjusted until the value Td equals d1 (maximum).

4.2 When SKMON = 0 (2203)

In this case, the range of NRZ edge variation caused by a Td change is positioned before a strobe edge, as indicated in FIG. 28. Therefore, the purpose is achieved when the DL1 and DL2 delay amounts are adjusted until the value Td equals 0 (minimum).

As described above, the present embodiment not only produces the same effect as the first to fourth embodiments but also introduces the following improvements:

(1) The present embodiment differs from the first to third embodiments in that the former does not require a fixed-pattern input or other special signal for the laser driver.
(2) In marked contrast to the second embodiment, the present embodiment does not require a high-speed clock for edge interval measurement and can reduce the power consumption and the amount of heat generation.
(3) The present embodiment differs from the first and second embodiments in that the former can make delay adjustments without depending on the phase relationship between NRZ and CLK outputs generated by the DSP.

Further, the optimum NRZ edge position can be detected within an adjustment range even when the NRZ phase adjustment range is narrower than one CLK cycle.

FIG. 29 illustrates the configuration of an optical disk apparatus according to a sixth embodiment of the present invention. Components having the same functions as the counterparts indicated in FIG. 5 are assigned the same reference numerals as the counterparts in FIG. 5 and their description is omitted herein. FIG. 30 shows the configuration of a laser driver 201 according to the present embodiment. Components having the same functions as the counterparts indicated in FIG. 15 are assigned the same reference numerals as the counterparts in FIG. 15 and their description is omitted herein. The present embodiment differs from the fifth embodiment of the present invention in that variable delay devices DL1 and DL2 for NRZ/CLK phase adjustment, which are at a stage preceding the laser driver 201, are incorporated into the laser driver and designated as DL3 and DL4 (2701, 2702), respectively. The method for adjusting variable delay devices DL3 and DL4 is the same as for the fifth embodiment.

The present embodiment produces the same effect as the fifth embodiment and uses a smaller number of optical disk apparatus components than the fifth embodiment. Therefore, the present embodiment contributes toward equipment downsizing and cost reduction. For adjusting variable delay devices DL3 and DL4, the present embodiment may use the same method as the fifth embodiment, but produces the same effect even when it uses the same DL3/DL4 adjustment method as the first to fourth embodiments.

FIG. 31 is a circuit diagram, which illustrates a PLL in the laser driver and a mark/space detector block according a seventh embodiment of the present invention. The present embodiment is equal to the sixth embodiment in optical disk apparatus configuration and laser driver configuration. The difference between the present embodiment and the sixth embodiment is that the former eliminates variable delay device DL4 (2702) for CLK phase adjustment and furnishes variable delay device DL5 (2801) for phase adjustment to the PLL output of internal clock chCLK, which is synchronized with CLK by the PLL 302. The method for adjusting variable delay devices DL3 and DL4 is the same as with the fifth embodiment.

The present embodiment produces the same effect as the sixth embodiment. Since an internal clock generally provides a higher degree of duty cycle stability than an external clock, the configuration of the present embodiment offers a higher degree of CLK/NRZ phase adjustment accuracy than that of the fifth embodiment. As a result, an increased margin can be provided for a phase shift between NRZ and CLK. For adjusting variable delay devices DL3 and DL4, the present embodiment may use the same method as the fifth embodiment, but produces the same effect even when it uses the same DL3/DL4 adjustment method as the first to fourth embodiments.

FIG. 32 shows a block diagram of a laser driver according to an eighth embodiment of the present invention. Components having the same functions as the counterparts indicated in FIG. 30, which describes the sixth embodiment, are assigned the same reference numerals as the counterparts in FIG. 30 and their description is omitted herein. The configuration of the optical disk apparatus according to the eighth embodiment is similar to the configuration shown in FIG. 29 except that the former is without monitor signal SKMON, which the laser driver 201 transmits to the microcomputer 204. The difference between FIG. 29 and FIG. 32 is as follows:

1. The SKMON output from the MON2 block 1001 to the microcomputer 204, which is external to the laser driver, is eliminated.
2. A delay control block 2901 is added so that the delay amounts of the variable delay circuits 2701, 2702 are automatically adjusted in accordance with the output signal 2902 generated by the MON2 and without communicating with the microcomputer 203.

In the present embodiment, the same delay amount adjustment sequence is followed by the delay circuits 2701, 2702 as in the fifth embodiment.

The present embodiment produces the same effect as the fifth embodiment. In addition, the present embodiment requires fewer connection lines between the laser driver 201 and the microcomputer 204 for controlling the laser driver and uses a smaller number of FPC wiring lines than the fourth embodiment. Further, the present embodiment requires a shorter period of control time than the fourth embodiment because the microcomputer and other components are not involved in adjustment. For adjusting variable delay devices DL3 and DL4, the present embodiment may use the same method as the fifth embodiment, but produces the same effect even when it uses the same DL3/DL4 adjustment method as the first to fourth and seventh embodiments. Further, the present embodiment may adopt the same variable delay device insertion position as the sixth embodiment, but produces the same effect even when it uses the same variable delay device insertion position as the eighth embodiment.

In the first to eighth embodiments in which the NRZ and CLK signals are respectively subjected to phase adjustment by variable delay circuits for NRZ/CLK phase adjustment purposes, the same effect can be produced even when either of the NRZ or CLK signal is subjected to phase adjustment by the variable delay circuits.

In the foregoing description, the NRZ signal is used as an example of a binary signal. However, it goes without saying that not only the NRZ signal but also an NRZI or other signal may be used as the binary signal for the present invention.

The present invention relates to an optical disk apparatus's laser driver having means for generating a recording waveform, known as a recording strategy, from a recording clock signal and the modulated signal to be recorded, and makes it possible to adjust the phases of a recording clock signal and modulated signal transmitted from a DSP or other means for modulated signal generation in order to reduce the possibility of recording strategy generation error, which may result from an improper phase relationship between the two signals.

## Claims

**1.** An optical disk apparatus equipped with a laser driver (201) for generating a drive waveform that drives a laser diode (205) in accordance with a binary recording signal and a recording clock signal, the binary recording signal being arranged to be recorded on a recording medium (207), the optical disk apparatus including:

a binary recording signal delay circuit (401) for performing a delay process on said binary recording signal in accordance with a control signal; the optical disk apparatus **characterised in that** it further includes
a recording clock signal delay circuit (402) for performing a delay process on said recording clock signal in accordance with the control signal,
wherein the delay amounts provided by said two delay circuits are varied to adjust the relative timing between the edges of said binary recording signal and recording clock signal.

**2.** The optical disk apparatus according to claim 1, wherein said delay circuits are incorporated in said laser driver.

**3.** An optical disk apparatus equipped with a laser driver (201) for generating a drive waveform that drives a laser diode (205) in accordance with the binary recording signal and recording clock signal to be recorded on a recording medium (207);
wherein said laser driver (201) comprises:

a binary recording signal delay circuit (2701) for performing a delay process on said binary recording signal; and
a phase synchronization means (302) the optical disk apparatus **characterised in that** the phase synchronisation means is for synchronizing the phase of the recording clock signal to be entered into said laser driver and the phase of an internal clock signal of said laser driver and the lower driver further comprises :

an internal clock output delay circuit (2081) which is provided after an internal clock output of said phase synchronization means, and
wherein the delay amount provided by said internal clock output delay circuit (2801) is varied to adjust the relative timing between the edges of said binary recording signal and recording clock signal, and the delay amounts provided by said two delay circuits are varied to adjust the relative timing between the edges of said binary recording signal and recording clock signal.

**4.** A phase adjustment method used in accordance with an entered binary signal and clock signal when the value of said binary signal is detected, the method including :

a binary recording signal delay process for performing a delay process on said binary recording signal in accordance with a control signal;
**characterised in that** the method further includes :
a recording clock signal delay process for performing a delay process on said recording clock signal in accordance with the control signal,
wherein said delay processes detect a binary signal while varying the delay amounts for the binary recording signal and recording clock signal, compare an entered known binary signal against the detected binary signal, and adjust the delay amounts to be applied to the binary recording signal and recording clock signal.

**5.** A laser driver (201) for generating a drive waveform that drives a laser diode (205) in accordance with the binary recording signal and recording clock signal, the binary recording signal being arranged to be recorded on a recording medium (207), the laser driver including;
a binary recording signal delay circuit (401) for performing a delay process on said binary recording signal;
the laser driver **characterised in that** it further includes:

a recording clock signal delay circuit (402) for performing a delay process on said recording clock signal; and
input means for entering a control signal that controls the delay amount of said binary recording signal delay circuit or recording clock signal delay circuit,
wherein either or both of the delay amounts of said two delay circuits are varied in accordance with said control signal to adjust the relative timing between the edges of said binary recording signal and recording clock signal.

**Patentansprüche**

1. Optischer Plattenapparat, ausgestattet mit einem Lasertreiber (201) zum Erzeugen einer Treiberwellenform, die eine Laserdiode (205) entsprechend einem binären Aufzeichnungssignal und einem Aufzeichnungstaktsignal ansteuert, wobei das binäre Aufzeichnungssignal zur Aufzeichnung auf einem Aufzeichnungsmedium (207) ausgelegt ist, und wobei der optische Plattenapparat aufweist:

    eine Binäraufzeichnungssignal-Verzögerungsschaltung (401) zur Durchführung eines Verzögerungsvorgangs an dem binären Aufzeichnungssignal entsprechend einem Steuersignal,
    wobei der optische Plattenapparat **dadurch gekennzeichnet ist, dass** er ferner aufweist:
    eine Aufzeichnungstaktsignal-Verzögerungsschaltung (402) zur Durchführung eines Verzögerungsvorgangs an dem Aufzeichnungstaktsignal entsprechend dem Steuersignal,
    wobei die von den beiden Verzögerungsschaltungen erzeugten Verzögerungsgrößen so geändert werden, dass sie die relative Zeit zwischen den Kanten des binären Aufzeichnungssignals und des Aufzeichnungstaktsignals justieren.

2. Optischer Plattenapparat nach Anspruch 1, wobei die Verzögerungsschaltungen in dem Lasertreiber eingebaut sind.

3. Optischer Plattenapparat, ausgestattet mit einem Lasertreiber (201) zum Erzeugen einer Treiberwellenform, die eine Laserdiode (205) entsprechend einem binären Aufzeichnungssignal und einem Aufzeichnungstaktsignal ansteuert, wobei das binäre Aufzeichnungssignal zur Aufzeichnung auf einem Aufzeichnungsmedium (207) ausgelegt ist,
wobei der Lasertreiber (201) aufweist:

    eine Binäraufzeichnungssignal-Verzögerungsschaltung (2701) zur Durchführung eines Verzögerungsvorgangs an dem binären Aufzeichnungssignal, und
    eine Phasensynchronisiereinrichtung (302),
    wobei der optische Plattenapparat **dadurch gekennzeichnet ist, dass** die Phasensynchronisiereinrichtung zum Synchronisieren der Phase des dem Lasertreiber zuzuführenden Aufzeichnungstaktsignals und der Phase eines internen Taktsignals des Lasertreibers dient, und der Lasertreiber ferner aufweist:
    eine Interntaktausgangs-Verzögerungsschaltung (2801), die einem Interntaktausgang der Phasensynchronisiereinrichtung nachgeschaltet ist, und
    wobei die von der Interntaktausgangs-Verzögerungsschaltung (2801) erzeugte Verzögerungsgröße zum Justieren der relativen Zeit zwischen den Kanten des binären Aufzeichnungssignals und des Aufzeichnungstaktsignals geändert wird und die von den beiden Verzögerungsschaltungen erzeugten Verzögerungsgrößen so geändert werden, dass die relative Zeit zwischen den Kanten des binären Aufzeichnungssignals und des Aufzeichnungstaktsignals justiert wird.

4. Phasenjustierverfahren, das entsprechend einem eingegebenen Binärsignal und einem Taktsignal beim Erfassen des Wertes des Binärsignals verwendet wird, wobei das Verfahren umfasst:

    einen Binäraufzeichnungssignal-Verzögerungsvorgang zur Durchführung eines Verzögerungsvorgangs an dem Binäraufzeichnungssignal entsprechend einem Steuersignal,
    **dadurch gekennzeichnet, dass** das Verfahren ferner umfasst:

        einen Aufzeichnungstaktsignal-Verzögerungsvorgang zur Durchführung eines Verzögerungsvorgangs an dem Aufzeichnungstaktsignal entsprechend dem Steuersignal,
        wobei die Verzögerungsvorgänge während der Änderung der Verzögerungsgrößen für das binäre Aufzeichnungssignal und das Aufzeichnungstaktsignal ein Binärsignal erfassen, mit diesem ein eingegebenes bekanntes Binärsignal vergleichen und die auf das binäre Aufzeichnungssignal und das Aufzeichnungstaktsignal anzuwendenden Verzögerungsgrößen justieren.

5. Lasertreiber (201) zum Erzeugen einer Treiberwellenform, die eine Laserdiode (205) entsprechend einem binären Aufzeichnungssignal und einem Aufzeichnungstaktsignal ansteuert, wobei das binäre Aufzeichnungssignal zur Aufzeichnung auf einem Aufzeichnungsmedium (207) ausgelegt ist, und wobei der Lasertreiber aufweist:

    eine Binäraufzeichnungssignal-Verzögerungsschaltung (401) zur Durchführung eines Verzögerungsvorgangs an dem binären Aufzeichnungssignal,

wobei der Lasertreiber **dadurch gekennzeichnet ist, dass** er ferner aufweist:

eine Aufzeichnungstaktsignal-Verzögerungsschaltung (402) zur Durchführung eines Verzögerungsvorgangs an dem Aufzeichnungstaktsignal, und
eine Eingabeeinrichtung zum Eingeben eines Steuersignals, das die Verzögerungsgröße der Binäraufzeichnungssignal-Verzögerungsschaltung oder der Aufzeichnungstaktsignal-Verzögerungsschaltung steuert,
wobei die Verzögerungsgröße mindestens einer der Verzögerungsschaltungen entsprechend dem Steuersignal geändert wird, um die relative Zeit zwischen den Kanten des binären Aufzeichnungssignals und des Aufzeichnungstaktsignals zu justieren.

## Revendications

1. Dispositif à disque optique équipé d'une commande laser (201) pour générer une forme d'onde de commande qui commande une diode laser (205) conformément à un signal d'enregistrement binaire et à un signal d'horloge d'enregistrement, le signal d'enregistrement binaire étant conçu pour être enregistré sur un support d'enregistrement (207), le dispositif à disque optique incluant :

un circuit de retard de signal d'enregistrement binaire (401) pour effectuer un traitement de retard sur ledit signal d'enregistrement binaire conformément à un signal de commande, le dispositif à disque optique étant **caractérisé en ce qu'**il inclut de plus :

un circuit de retard de signal d'horloge d'enregistrement (402) pour effectuer un traitement de retard sur ledit signal d'horloge d'enregistrement conformément au signal de commande,
dans lequel les quantités de retard délivrées par lesdits deux circuits de retard sont modifiées pour régler le cadencement relatif entre les fronts desdits signal d'enregistrement binaire et signal d'horloge d'enregistrement.

2. Dispositif à disque optique selon la revendication 1, dans lequel lesdits circuits de retard sont incorporés dans ladite commande laser.

3. Dispositif à disque optique équipé d'une commande laser (201) pour générer une forme d'onde de commande qui commande une diode laser (205) conformément à un signal d'enregistrement binaire et à un signal d'horloge d'enregistrement, le signal d'enregistrement binaire étant conçu pour être enregistré sur un support d'enregistrement (207),
dans lequel ladite commande laser (201) comporte :

un circuit de retard de signal d'enregistrement binaire (2701) pour effectuer un traitement de retard sur ledit signal d'enregistrement binaire, et
des moyens de synchronisation de phase (302),
le dispositif à disque optique est **caractérisé en ce que** les moyens de synchronisation de phase servent à synchroniser la phase du signal d'horloge d'enregistrement à entrer dans ladite commande laser et la phase d'un signal d'horloge interne de ladite commande laser et la commande laser comporte de plus **:**

un circuit de retard de sortie d'horloge interne (2801) qui est fourni après une sortie d'horloge interne desdits moyens de synchronisation de phase, et
dans lequel la quantité de retard délivrée par ledit circuit de retard de sortie d'horloge interne (2801) est modifiée pour ajuster le cadencement relatif entre les fronts desdits signal d'enregistrement binaire et signal d'horloge d'enregistrement, et les quantités de retard délivrées par lesdits deux circuits de retard sont modifiées pour ajuster le cadencement relatif entre les fronts desdits signal d'enregistrement binaire et signal d'horloge d'enregistrement.

4. Procédé d'ajustement de phase utilisé conformément à un signal binaire et à un signal d'horloge entré lorsque la valeur dudit signal binaire est détectée, le procédé incluant :

un traitement de retard de signal d'enregistrement binaire pour effectuer un traitement de retard sur ledit signal d'enregistrement binaire conformément à un signal de commande,
**caractérisé en ce que** le procédé inclut de plus :

un traitement de retard de signal d'horloge d'enregistrement pour effectuer un traitement de retard sur ledit signal d'horloge d'enregistrement conformément au signal de commande,
dans lequel lesdits traitements de retard détectent un signal binaire tout en modifiant les quantités de retard pour le signal d'enregistrement binaire et le signal d'horloge d'enregistrement, comparent un signal binaire connu entré au signal binaire détecté, et ajustent les quantités de retard à appliquer au signal d'enregistrement binaire et au signal d'horloge d'enregistrement.

**5.** Commande laser (201) pour générer une forme d'onde de commande qui commande une diode laser (205) conformément à un signal d'enregistrement binaire et à un signal d'horloge d'enregistrement, le signal d'enregistrement binaire étant conçu pour être enregistré sur un support d'enregistrement (207), la commande laser incluant :

un circuit de retard de signal d'enregistrement binaire (401) pour effectuer un traitement de retard sur ledit signal d'enregistrement binaire,
la commande laser étant **caractérisée en ce qu'**elle inclut de plus :

un circuit de retard de signal d'horloge d'enregistrement (402) pour effectuer un traitement de retard sur ledit signal d'horloge d'enregistrement, et
des moyens d'entrée pour entrer un signal de commande qui commande la quantité de retard dudit circuit de retard de signal d'enregistrement binaire ou circuit de retard de signal d'horloge d'enregistrement,
dans laquelle l'une ou les deux quantités de retard desdits deux circuits de retard sont modifiées conformément audit signal de commande pour ajuster le cadencement relatif entre les fronts desdits signal d'enregistrement binaire et signal d'horloge d'enregistrement.

FIG. 1

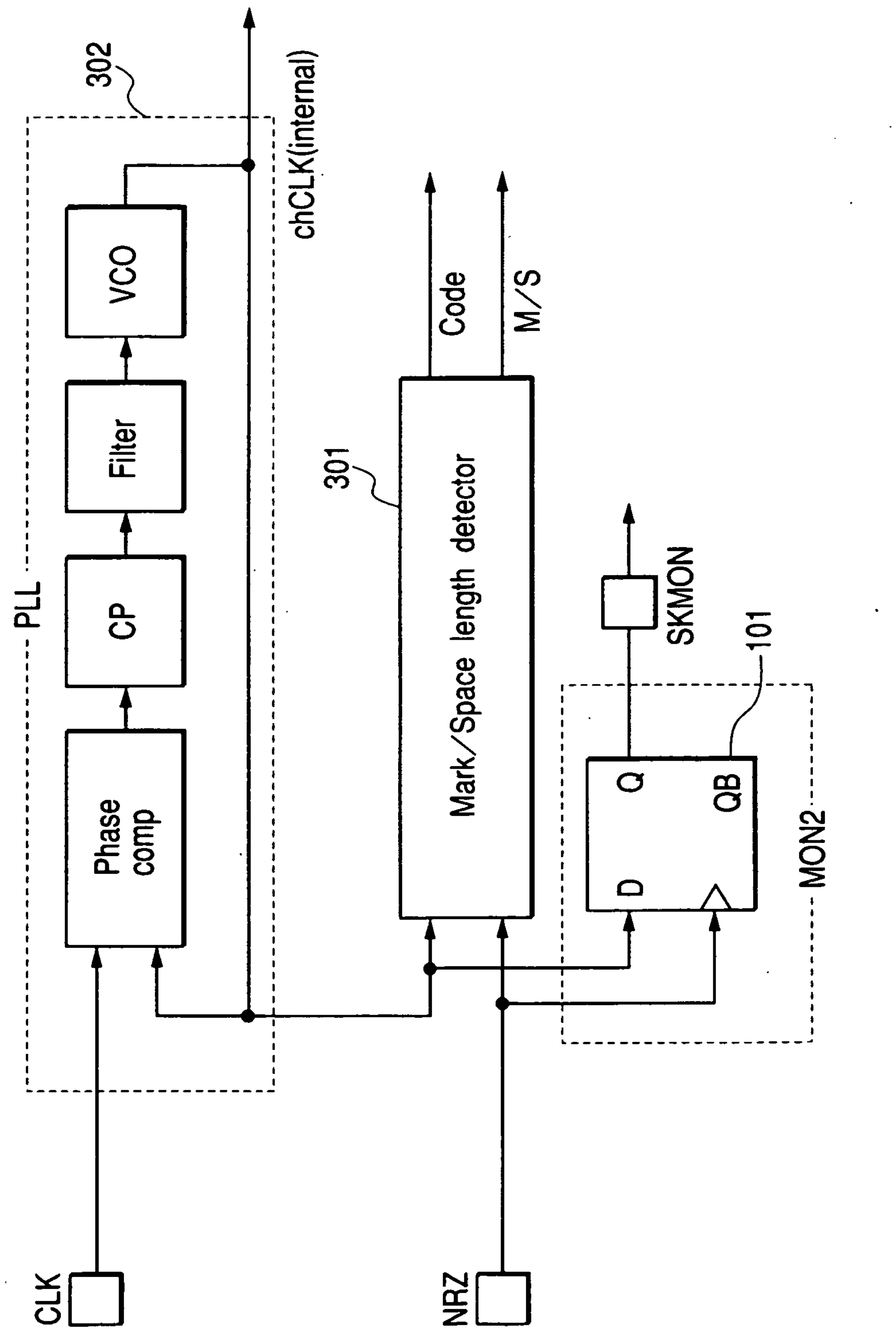
302
PLL
Phase comp
CP
Filter
VCO
chCLK(internal)
301
Mark/Space length detector
Code
M/S
SKMON
101
D
Q
QB
MON2
CLK
NRZ

FIG. 2

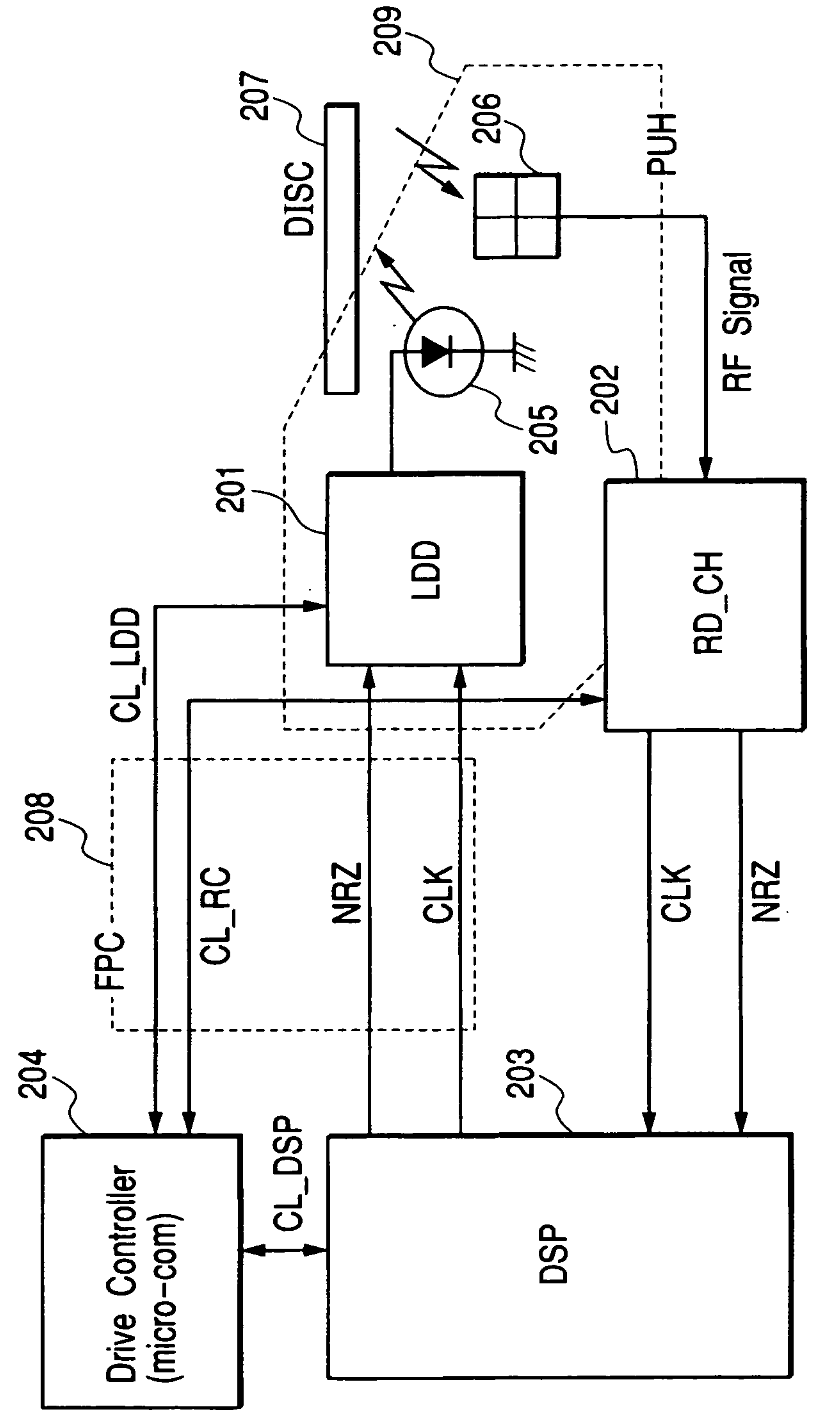
207
DISC
209
206
PUH
RF Signal
205
201
LDD
202
RD_CH
CL_LDD
208
FPC
CL_RC
NRZ
CLK
CLK
NRZ
204
203
Drive Controller
(micro-com)
CL_DSP
DSP

FIG. 3

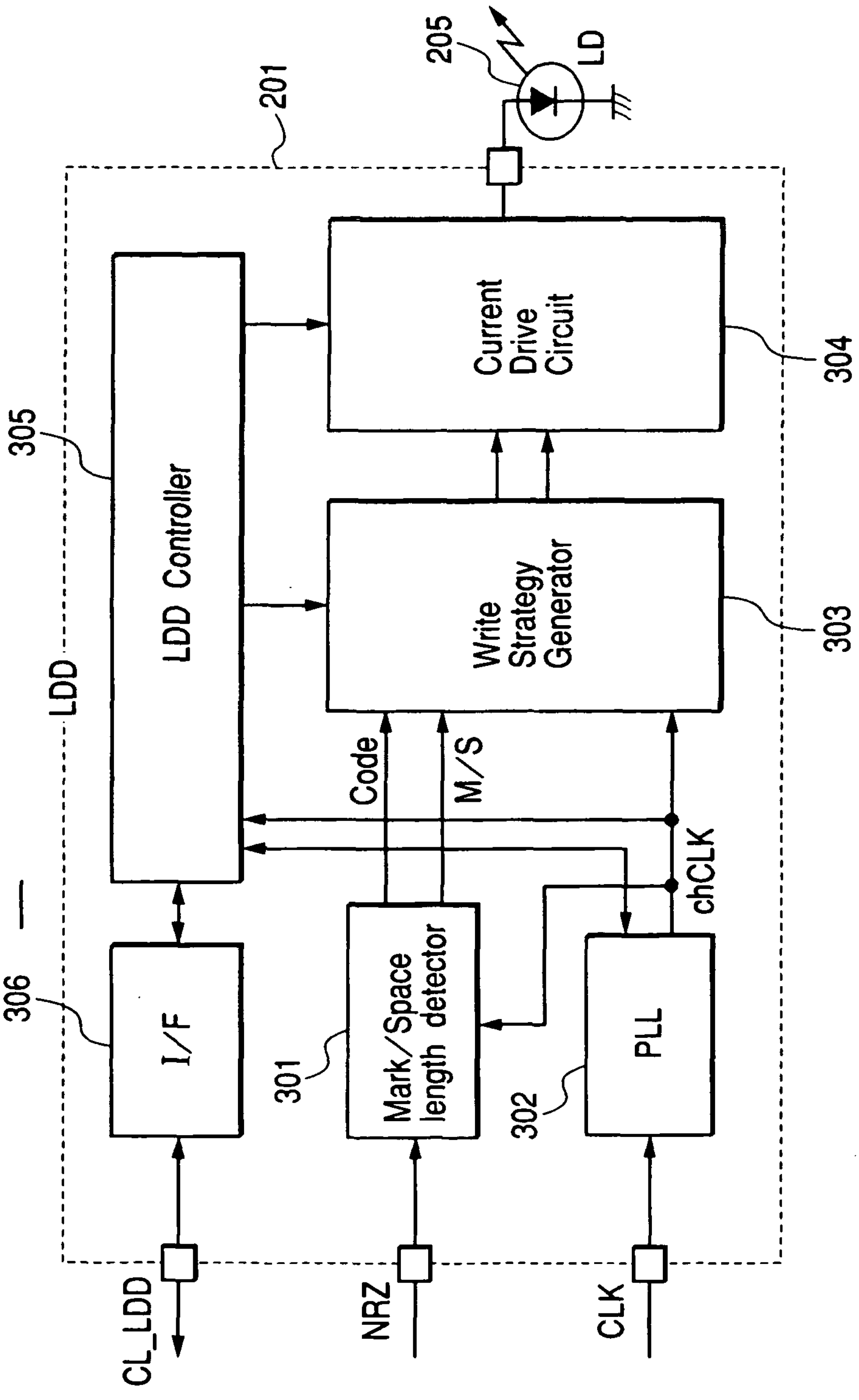

201
205
LD
LDD
305
LDD Controller
Current Drive Circuit
304
Write Strategy Generator
303
Code
M/S
chCLK
306
I/F
301
Mark/Space length detector
302
PLL
CL_LDD
NRZ
CLK

FIG. 4

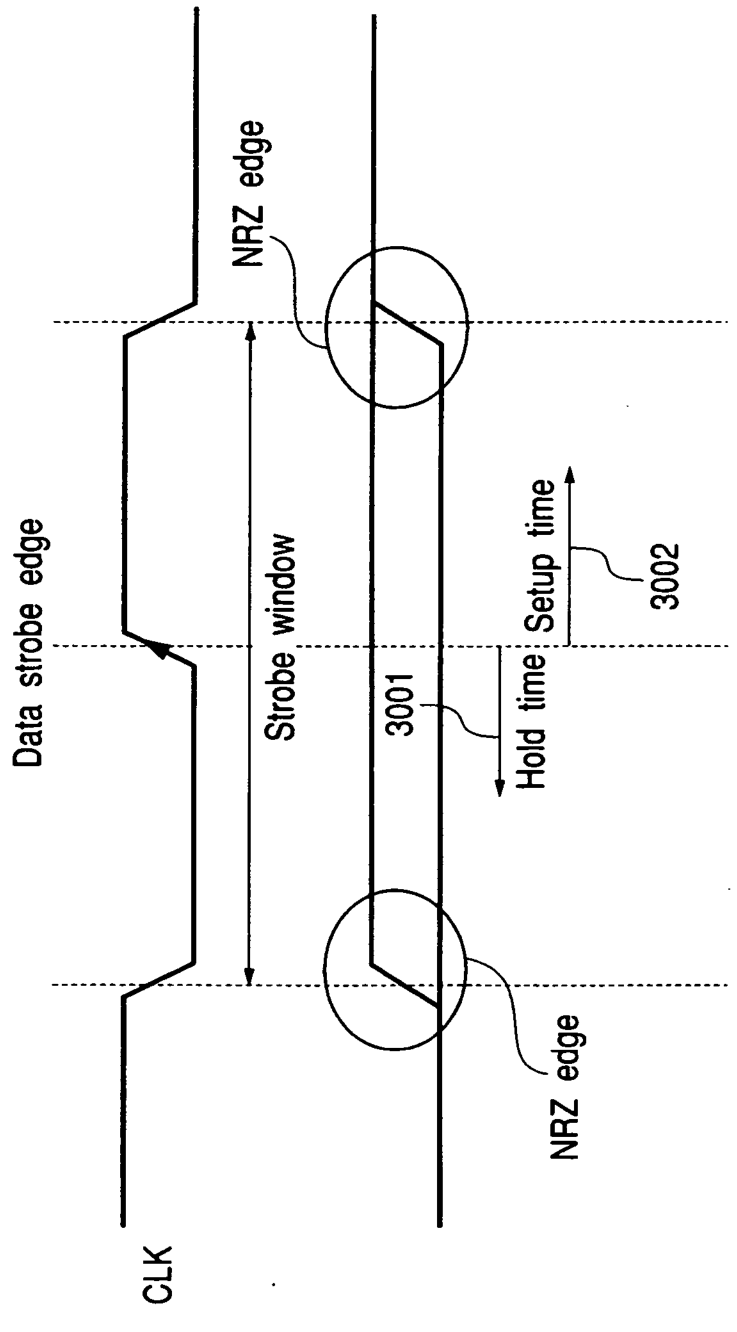
Data strobe edge
CLK
Strobe window
NRZ edge
3001
Hold time
Setup time
3002
NRZ edge

FIG. 5

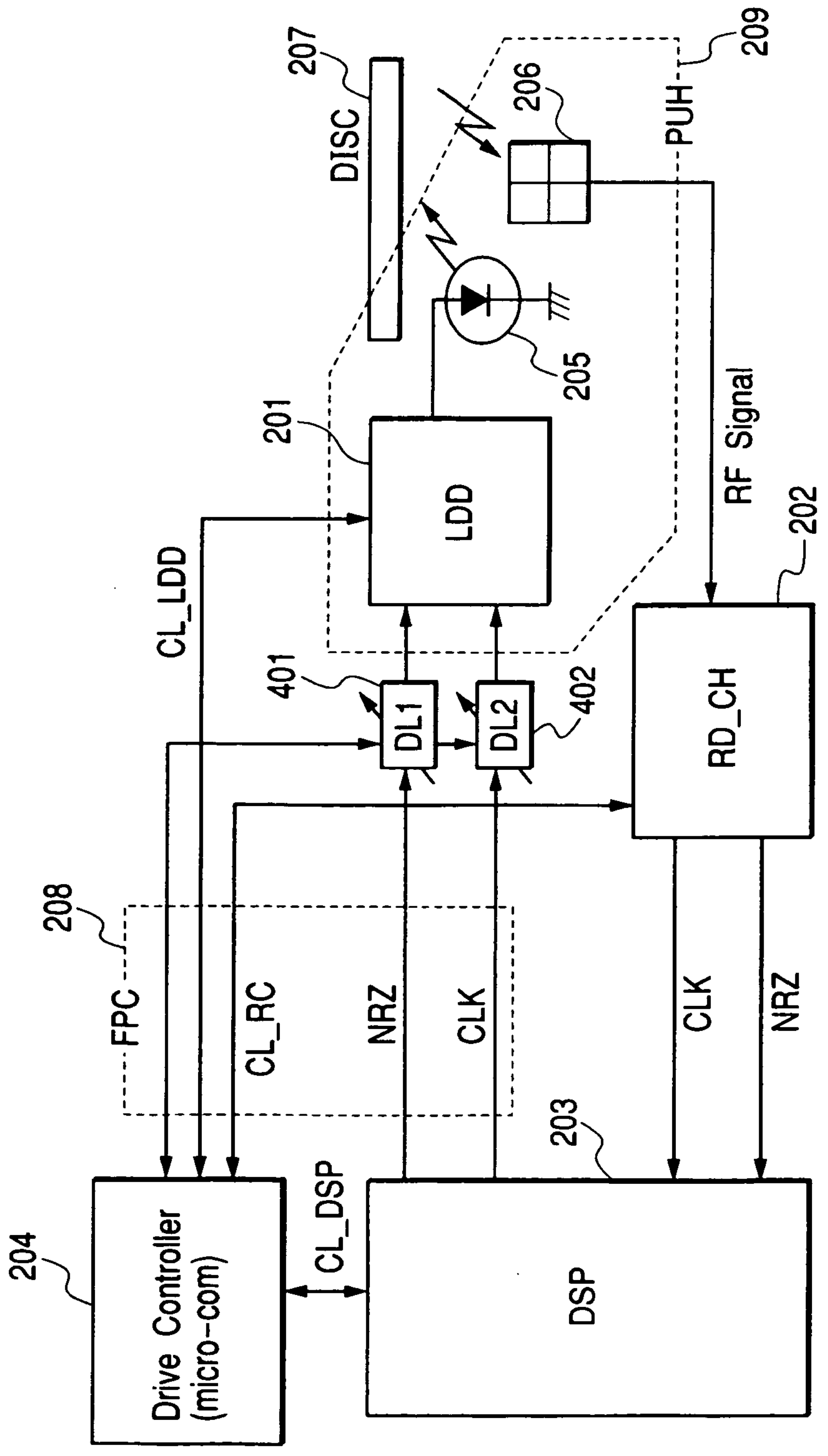
DISC
207
206
PUH
209
205
201
LDD
RF Signal
202
RD_CH
CL_LDD
401
DL1
DL2
402
208
FPC
CL_RC
NRZ
CLK
CLK
NRZ
203
204
Drive Controller
(micro-com)
CL_DSP
DSP

FIG. 6

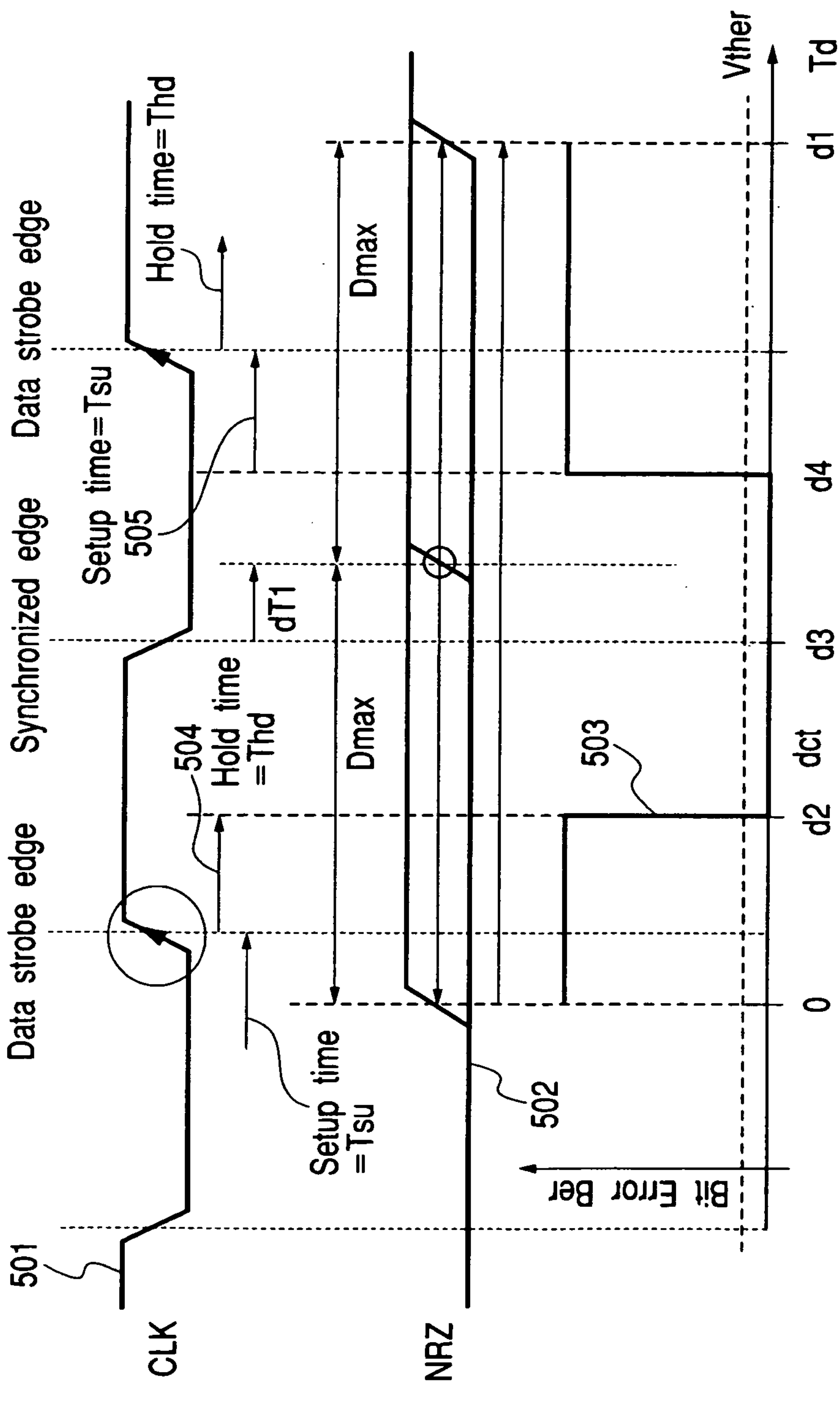

CLK
NRZ
501
502
503
504
505
Data strobe edge
Synchronized edge
Data strobe edge
Setup time =Tsu
Hold time =Thd
Setup time=Tsu
Hold time=Thd
dT1
Dmax
Dmax
Bit Error Ber
Vther
Td
0
d2
dct
d3
d4
d1

FIG. 7

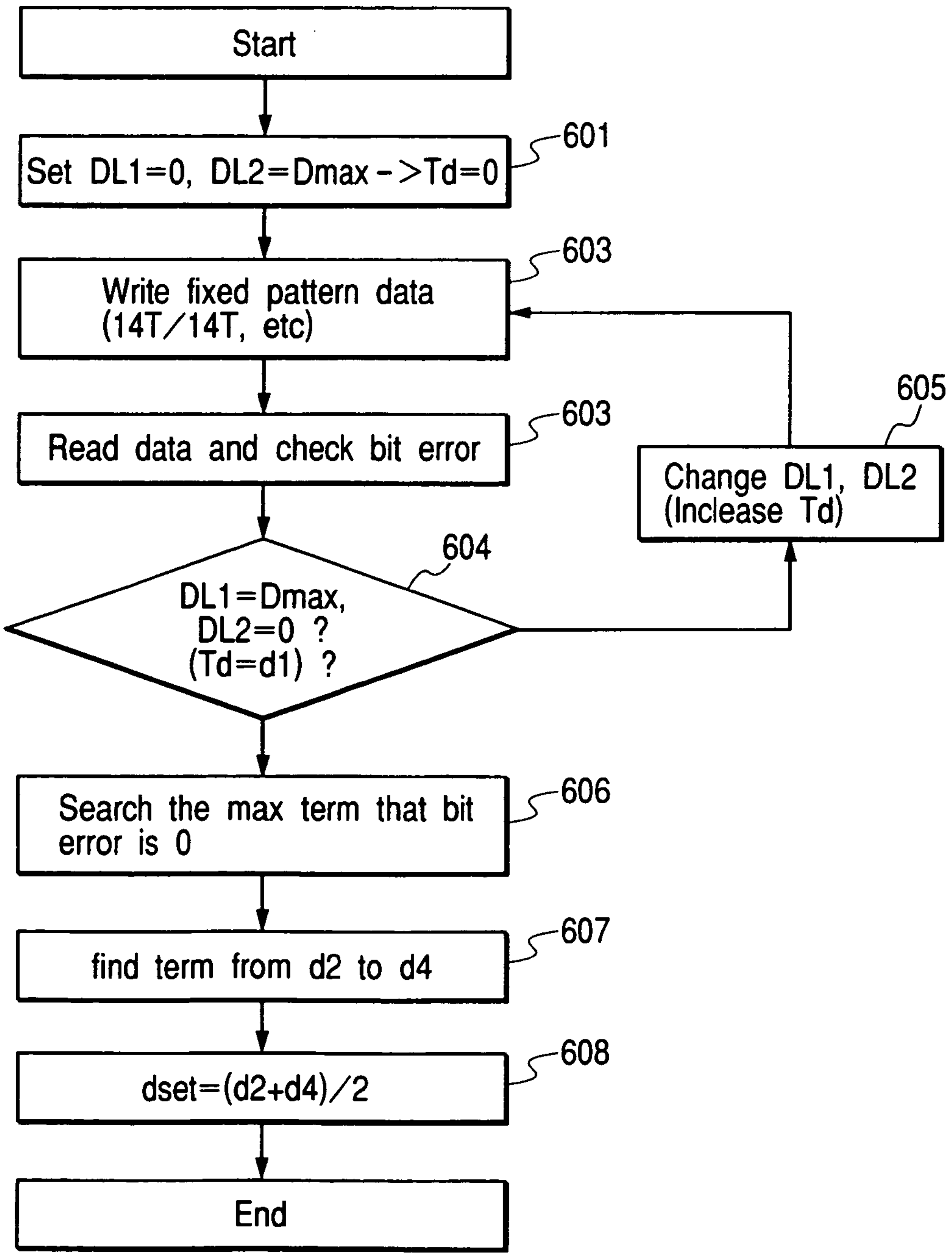
Start
601
Set DL1=0, DL2=Dmax->Td=0
603
Write fixed pattern data
(14T/14T, etc)
603
Read data and check bit error
605
Change DL1, DL2
(Inclease Td)
604
DL1=Dmax,
DL2=0 ?
(Td=d1) ?
606
Search the max term that bit error is 0
607
find term from d2 to d4
608
dset=(d2+d4)/2
End

FIG. 8

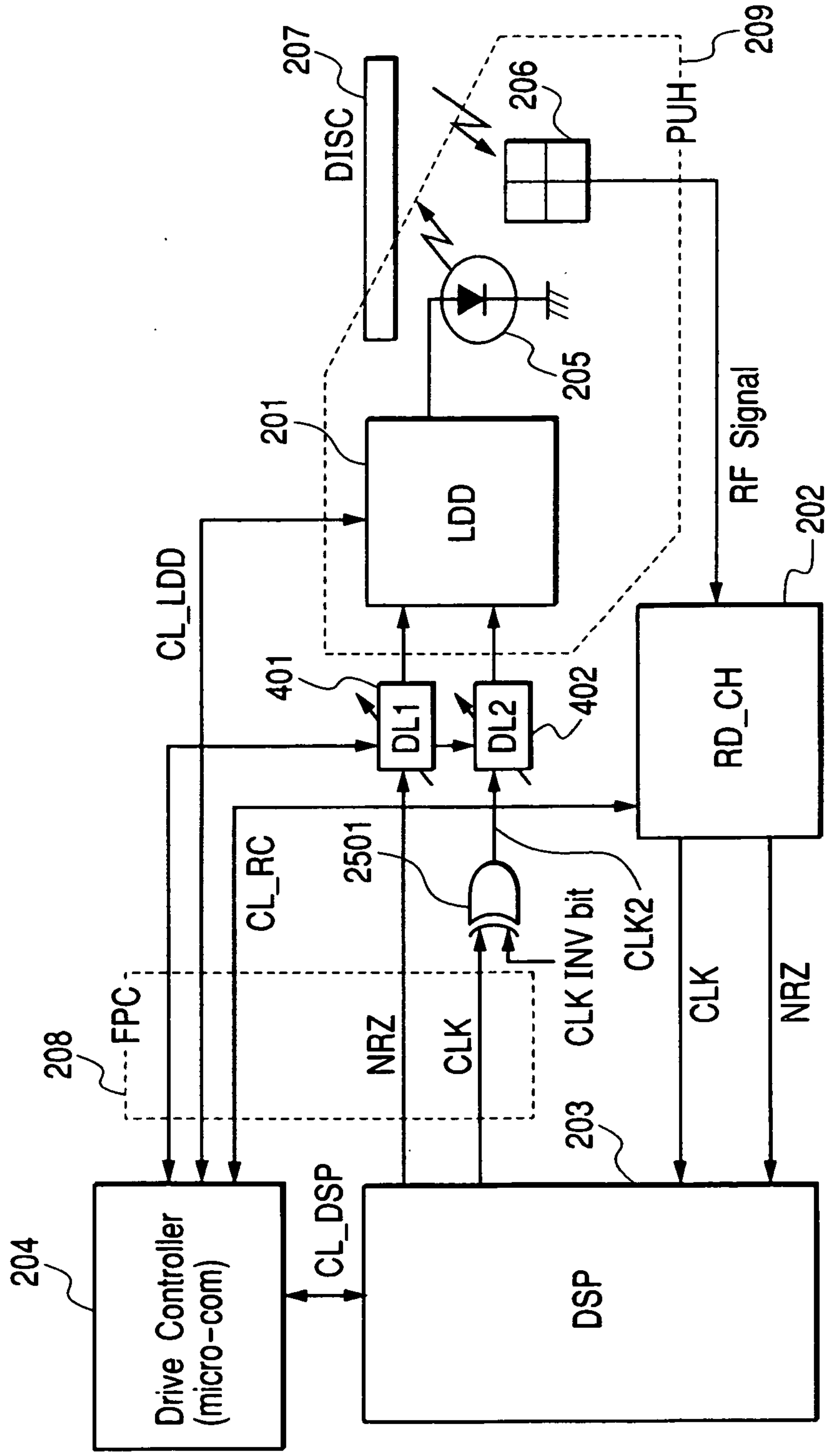
207
DISC
209
PUH
206
205
201
LDD
CL_LDD
RF Signal
202
RD_CH
401
DL1
402
DL2
2501
CL_RC
CLK INV bit
CLK2
208
FPC
NRZ
CLK
CLK
NRZ
203
CL_DSP
204
Drive Controller
(micro-com)
DSP

FIG. 9

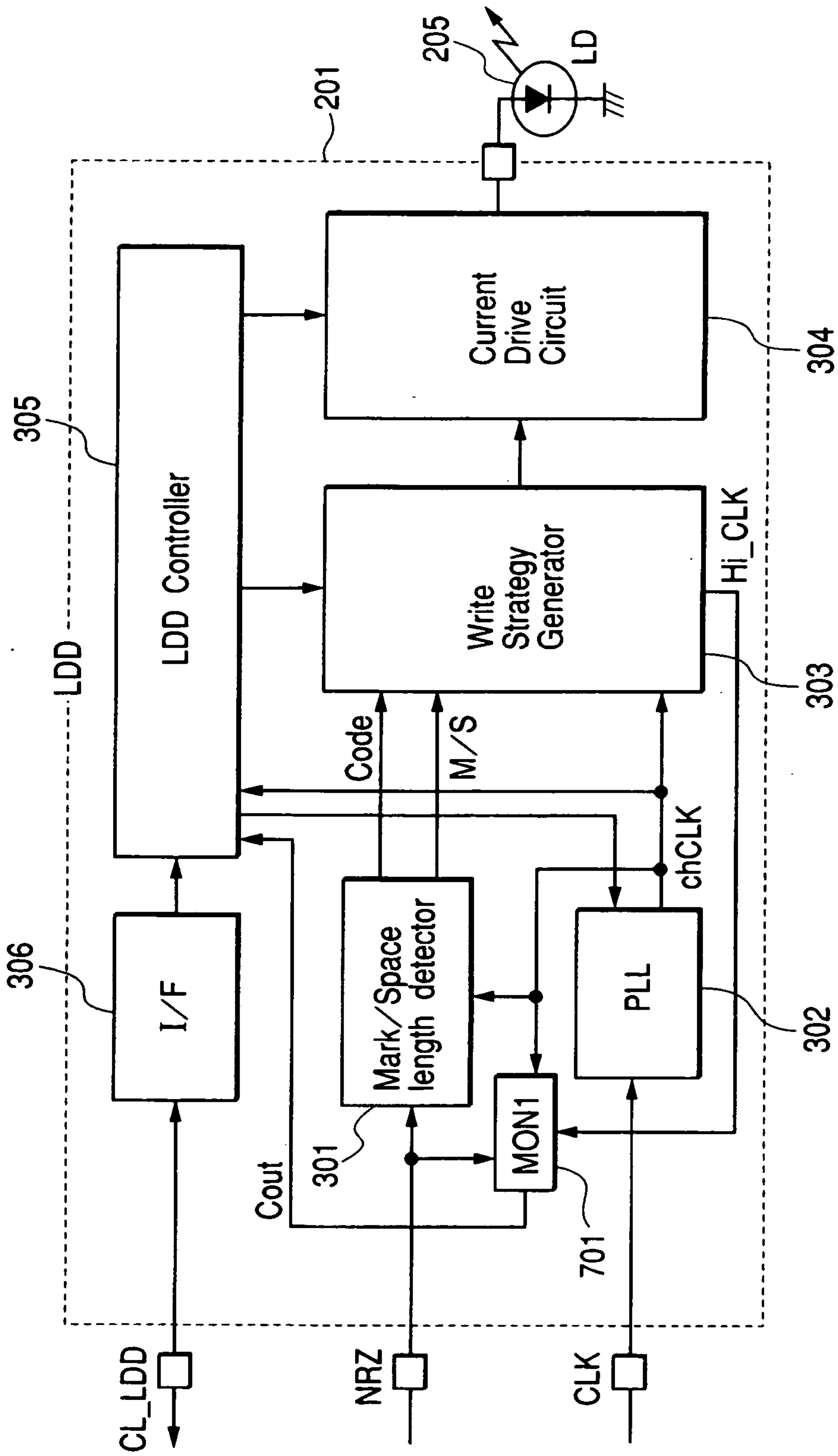
201
205
LD
LDD
305
LDD Controller
Current
Drive
Circuit
304
Write
Strategy
Generator
Hi_CLK
303
Code
M/S
chCLK
306
I/F
Mark/Space
length detector
PLL
302
MON1
301
Cout
701
CL_LDD
NRZ
CLK

FIG. 10

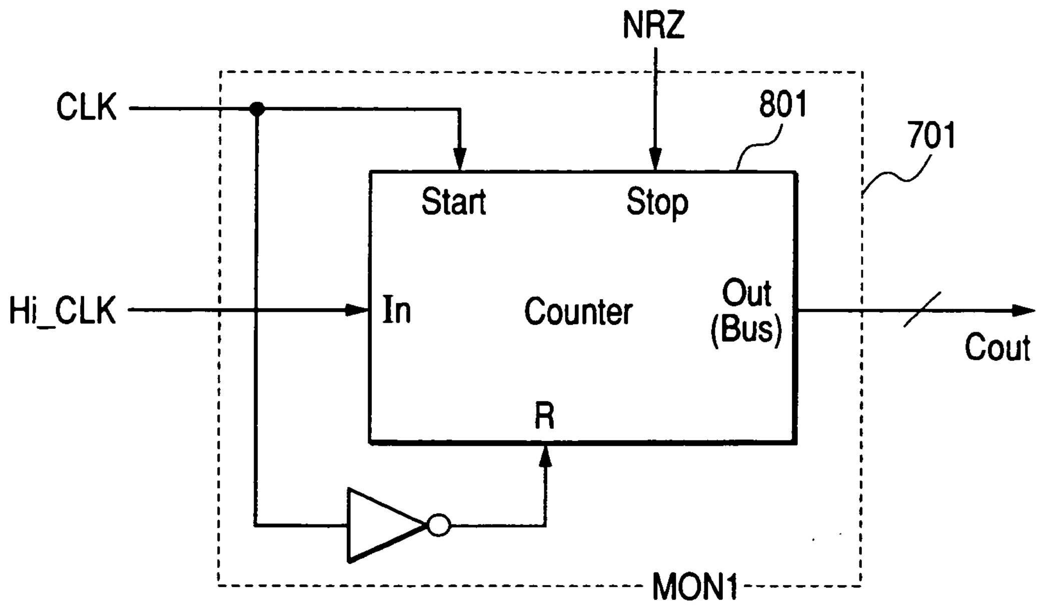
NRZ
CLK
801
701
Start
Stop
Hi_CLK
In
Counter
Out
(Bus)
Cout
R
MON1

FIG. 11

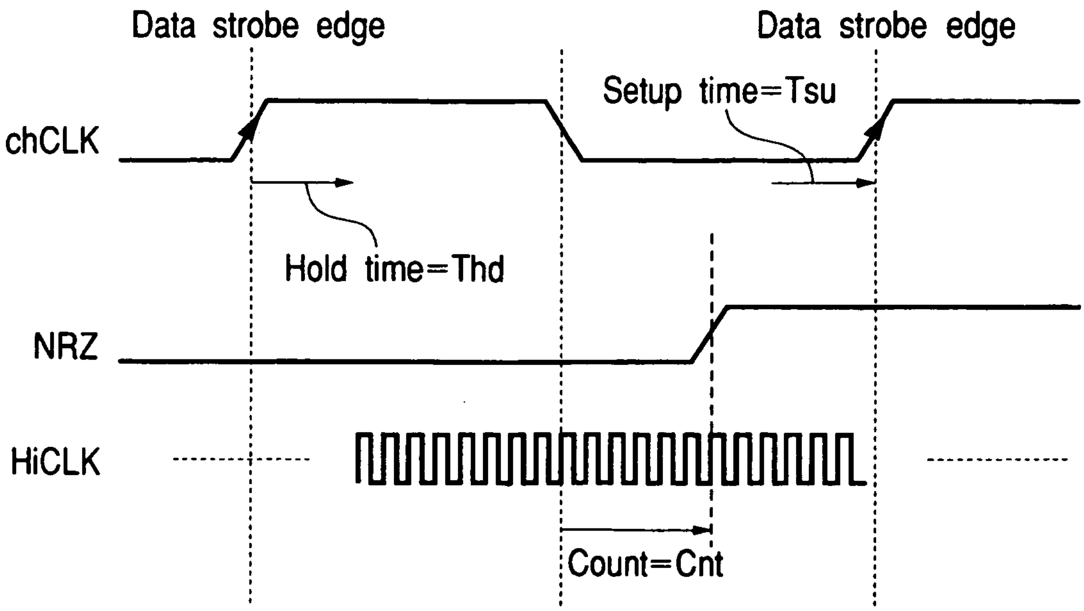
Data strobe edge
Data strobe edge
Setup time=Tsu
chCLK
Hold time=Thd
NRZ
HiCLK
Count=Cnt

FIG. 12

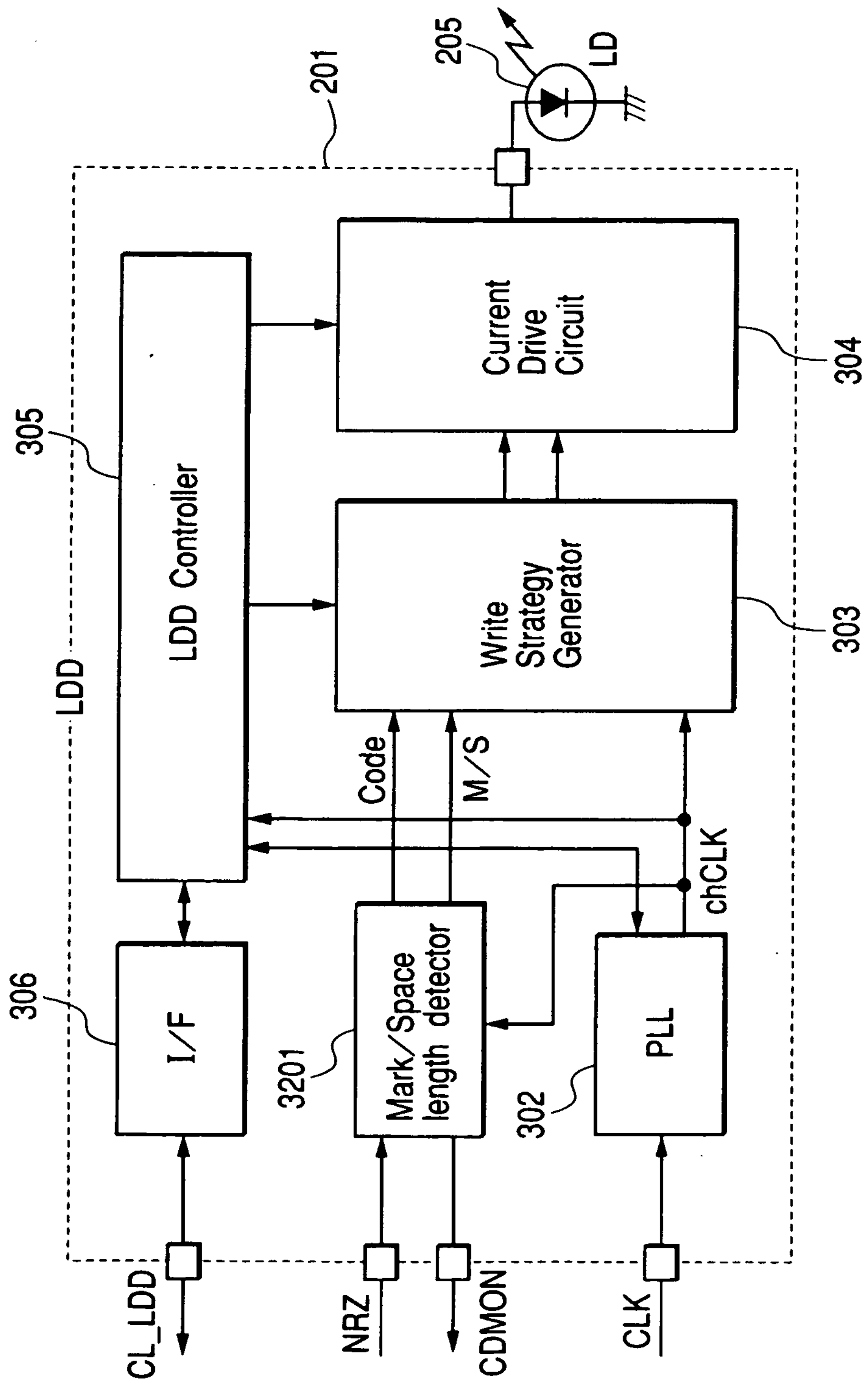

LDD
201
205
LD
305
LDD Controller
Current Drive Circuit
304
Write Strategy Generator
303
Code
M/S
chCLK
306
I/F
3201
Mark/Space length detector
302
PLL
CL_LDD
NRZ
CDMON
CLK

FIG. 13

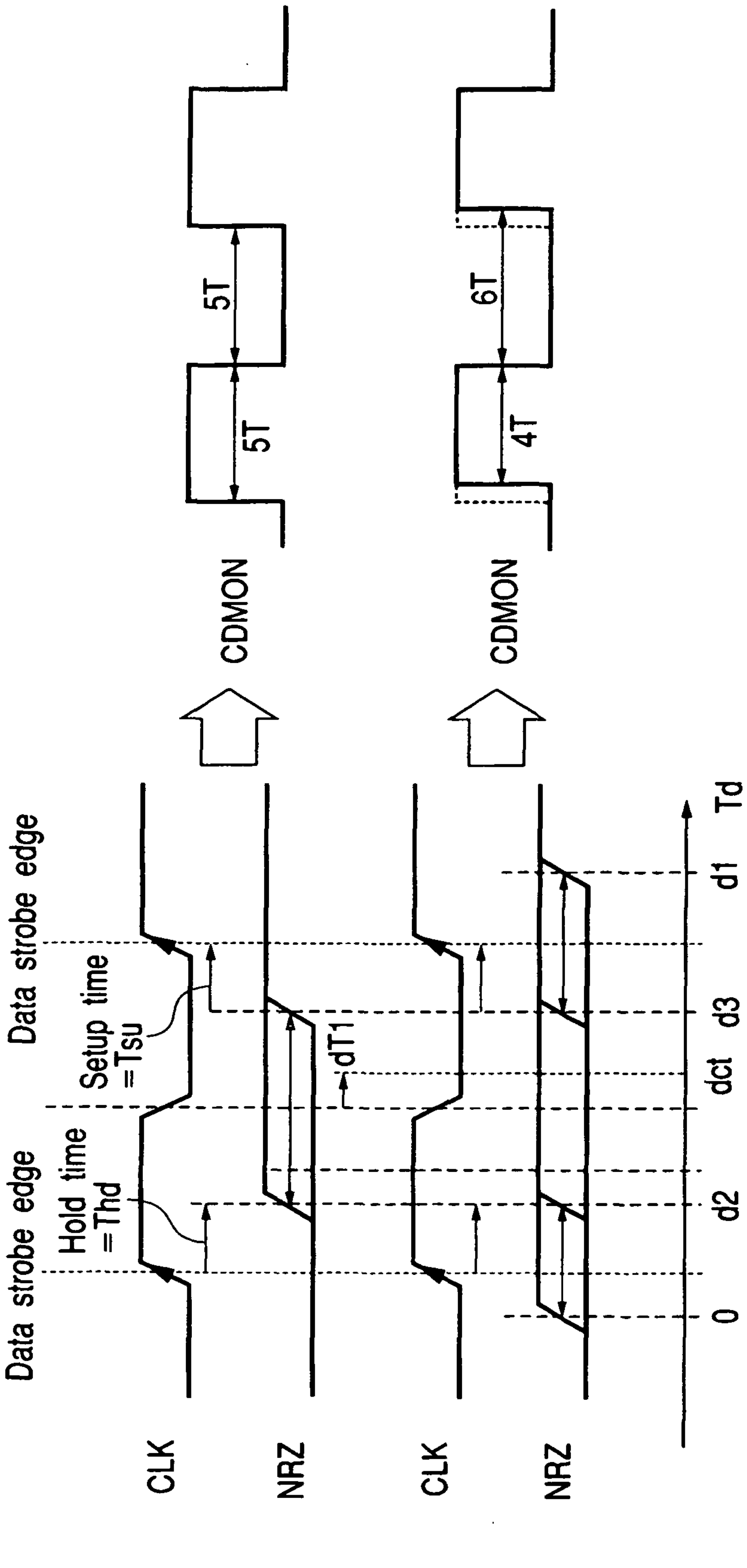
Data strobe edge
Data strobe edge
Hold time =Thd
Setup time =Tsu
dT1
CLK
NRZ
CLK
NRZ
0
d2
dct
d3
d1
Td
CDMON
CDMON
5T
5T
4T
6T

FIG. 14

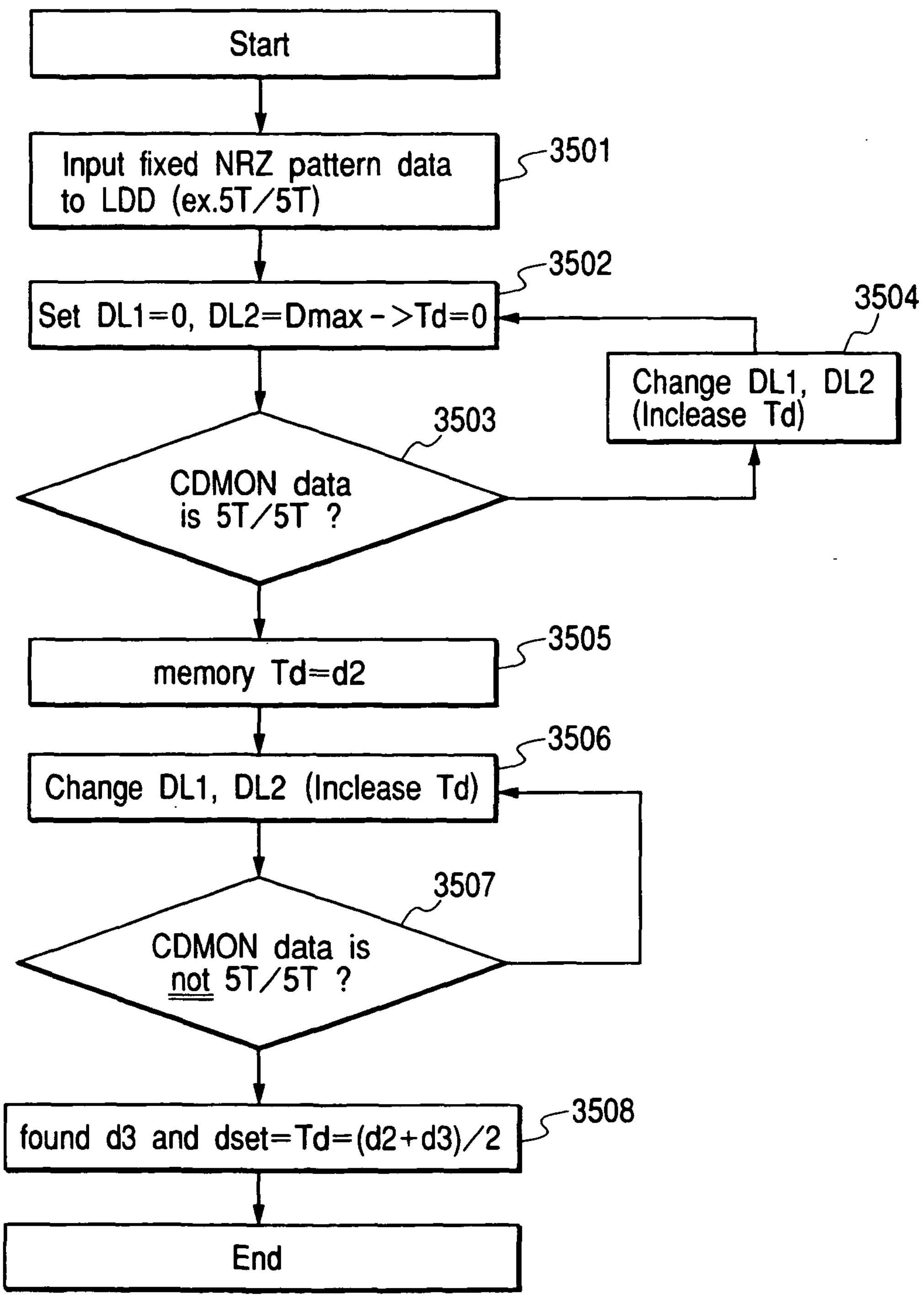
Start
Input fixed NRZ pattern data to LDD (ex.5T/5T)
3501
Set DL1=0, DL2=Dmax->Td=0
3502
CDMON data is 5T/5T ?
3503
Change DL1, DL2 (Inclease Td)
3504
memory Td=d2
3505
Change DL1, DL2 (Inclease Td)
3506
CDMON data is not 5T/5T ?
3507
found d3 and dset=Td=(d2+d3)/2
3508
End

FIG. 15

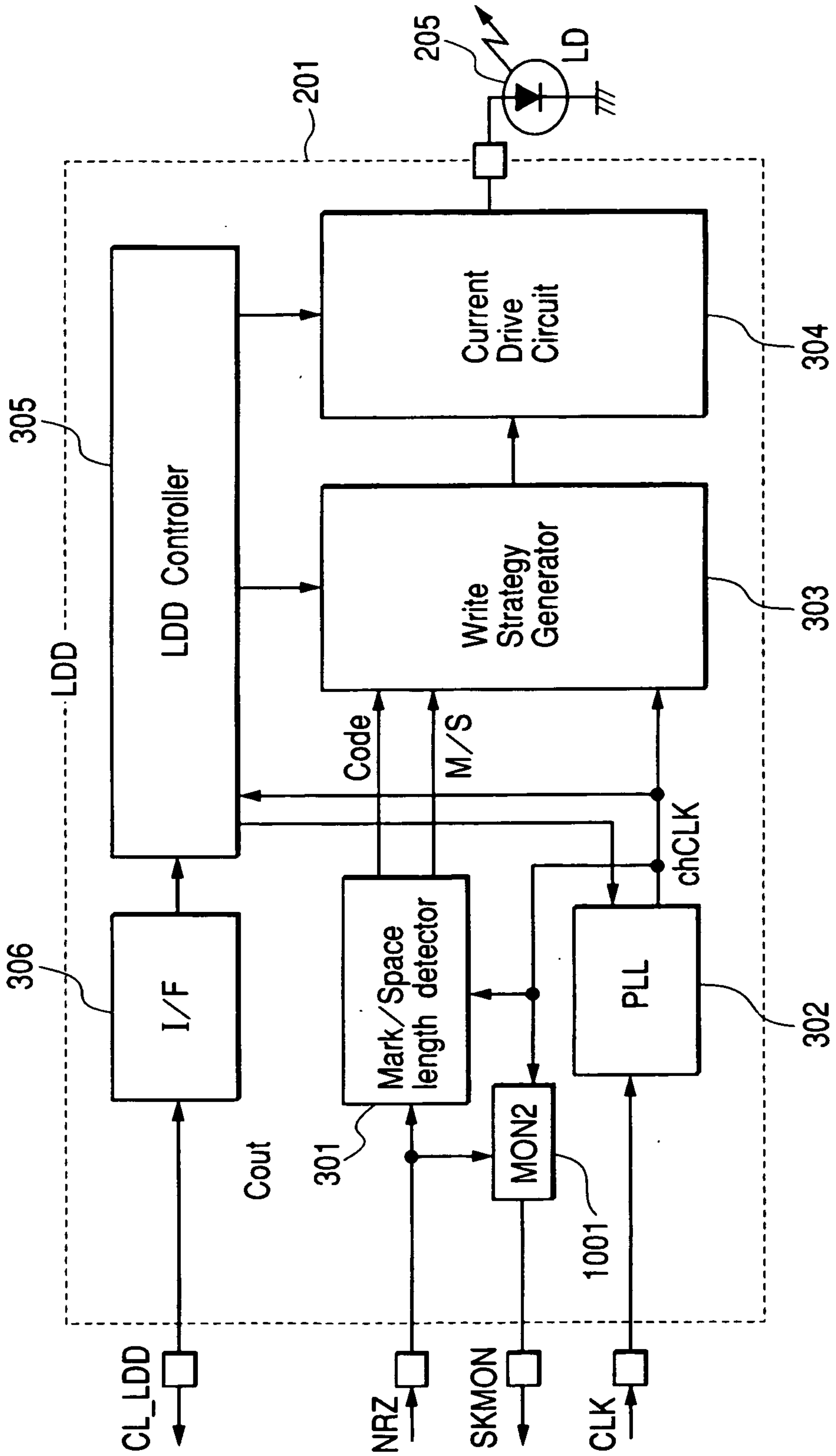
201
205
LD
LDD
305
LDD Controller
Current
Drive
Circuit
304
Write
Strategy
Generator
303
Code
M/S
chCLK
306
I/F
Mark/Space
length detector
301
PLL
302
MON2
1001
Cout
CL_LDD
NRZ
SKMON
CLK

FIG. 16

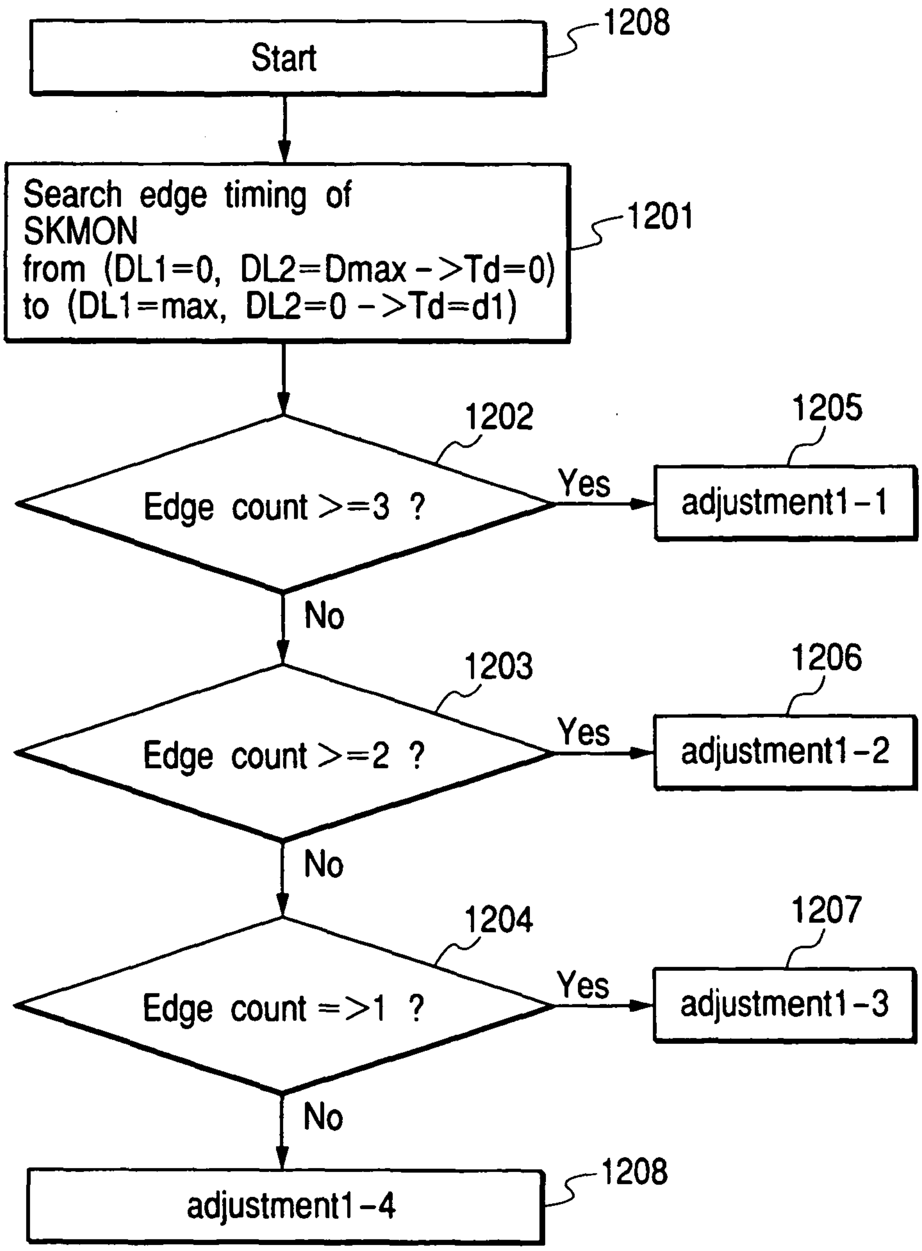
Start
1208
Search edge timing of SKMON from (DL1=0, DL2=Dmax->Td=0) to (DL1=max, DL2=0->Td=d1)
1201
Edge count >=3 ?
1202
Yes
adjustment1-1
1205
No
Edge count >=2 ?
1203
Yes
adjustment1-2
1206
No
Edge count =>1 ?
1204
Yes
adjustment1-3
1207
No
adjustment1-4
1208

FIG. 17

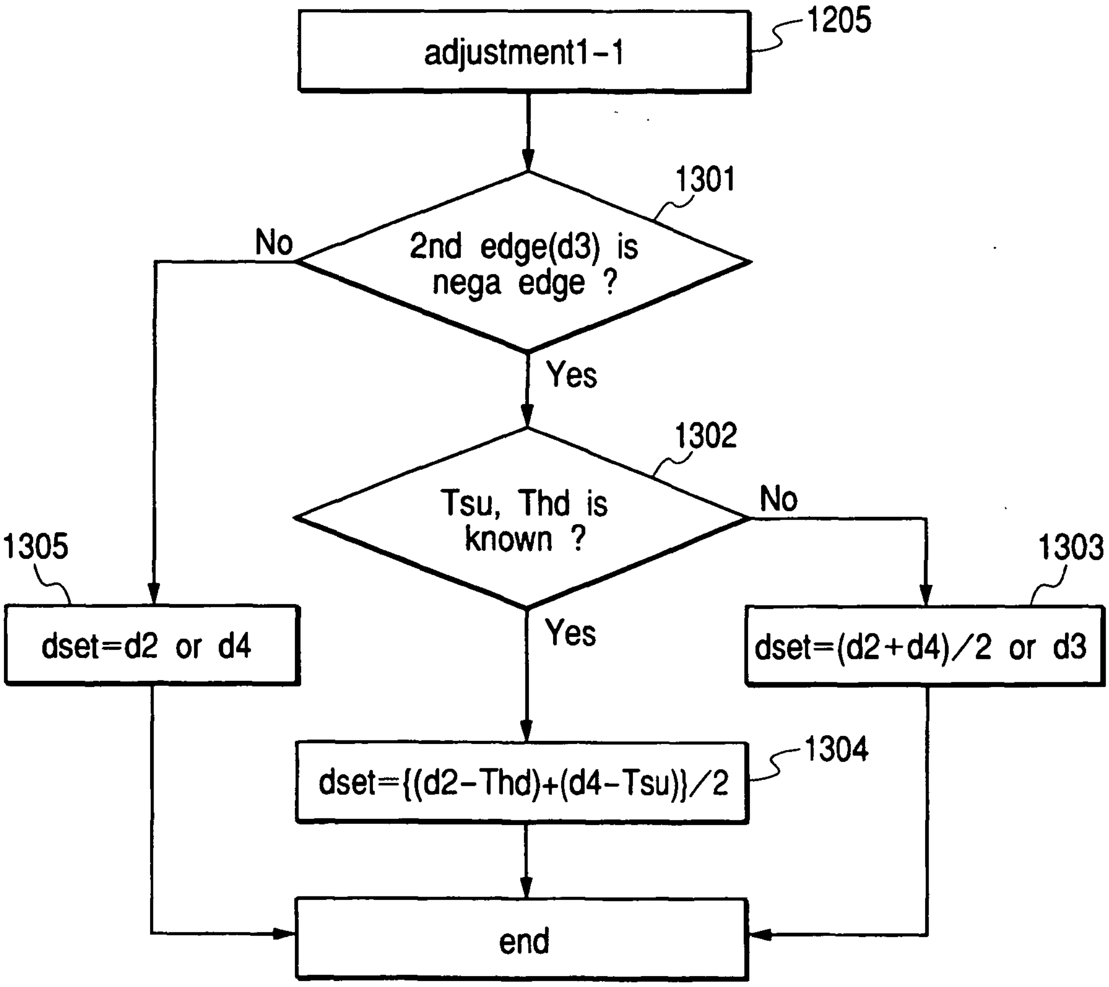

adjustment1-1
1205
2nd edge(d3) is nega edge ?
1301
No
Yes
Tsu, Thd is known ?
1302
No
Yes
1305
dset=d2 or d4
1303
dset=(d2+d4)/2 or d3
dset={(d2-Thd)+(d4-Tsu)}/2
1304
end

FIG. 18

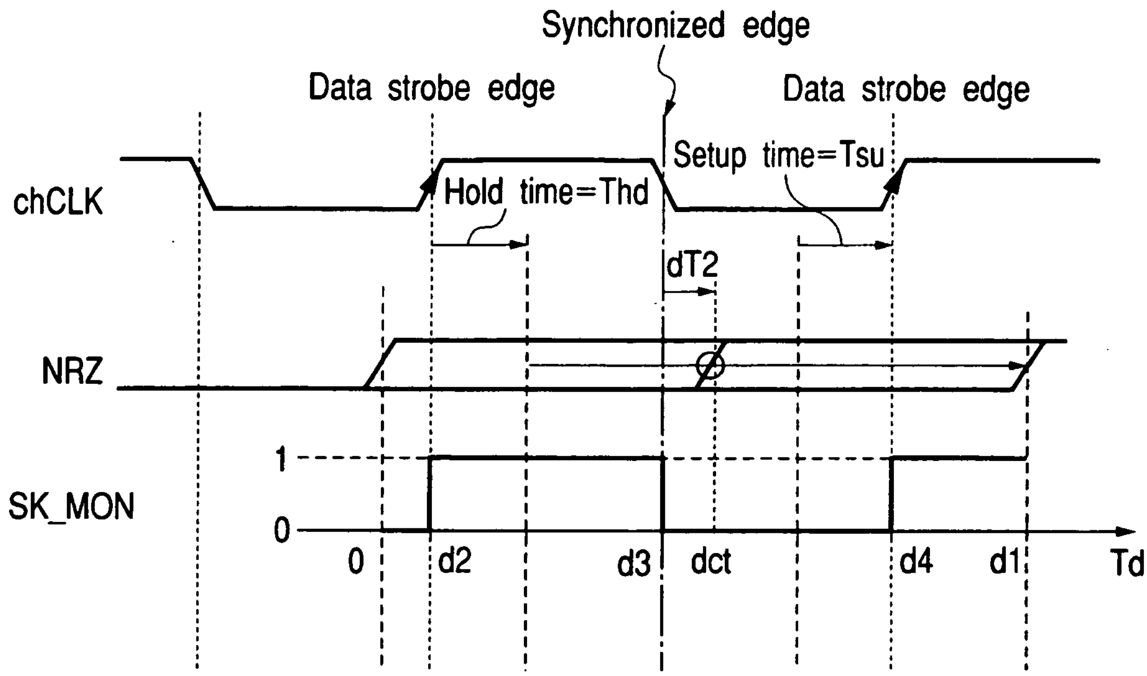
Synchronized edge
Data strobe edge
Data strobe edge
chCLK
Hold time=Thd
Setup time=Tsu
dT2
NRZ
SK_MON
1
0
0
d2
d3
dct
d4
d1
Td

FIG. 19

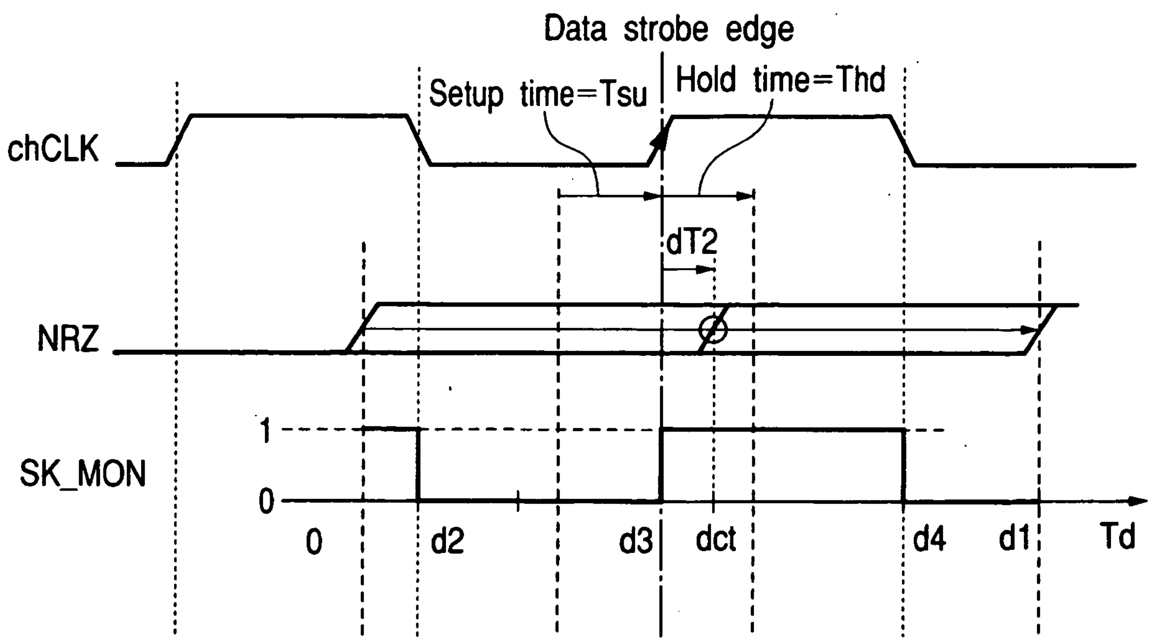
Data strobe edge
Setup time=Tsu
Hold time=Thd
chCLK
dT2
NRZ
SK_MON
1
0
0
d2
d3
dct
d4
d1
Td

FIG. 20

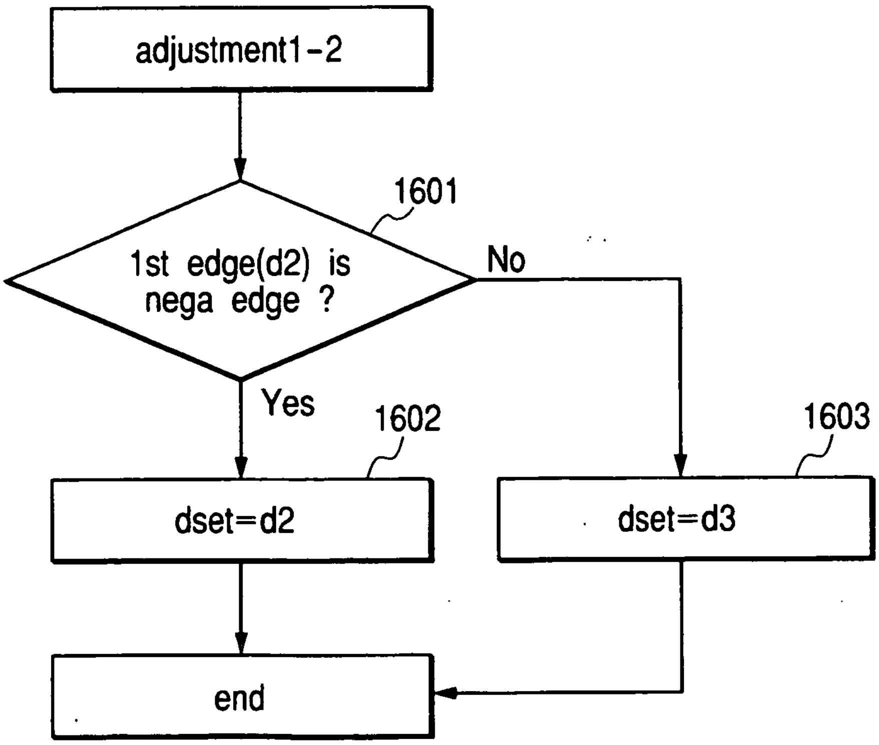
adjustment1-2
1601
1st edge(d2) is
nega edge ?
No
Yes
1602
1603
dset=d2
dset=d3
end

FIG. 21

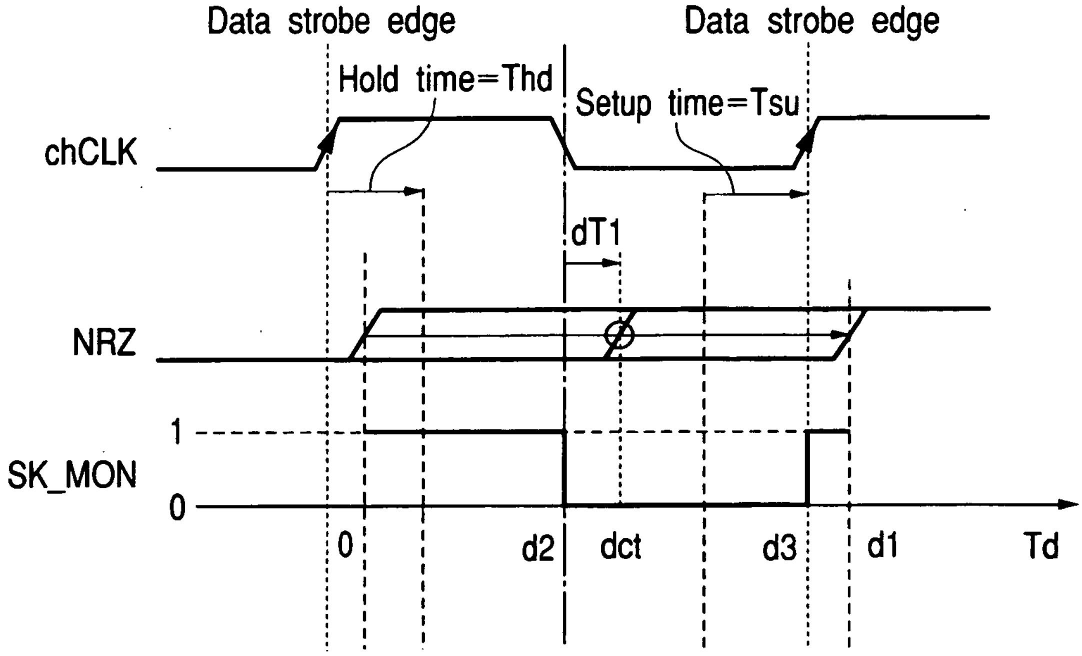
Data strobe edge
Data strobe edge
Hold time=Thd
Setup time=Tsu
chCLK
dT1
NRZ
1
SK_MON
0
0
d2
dct
d3
d1
Td

FIG. 22

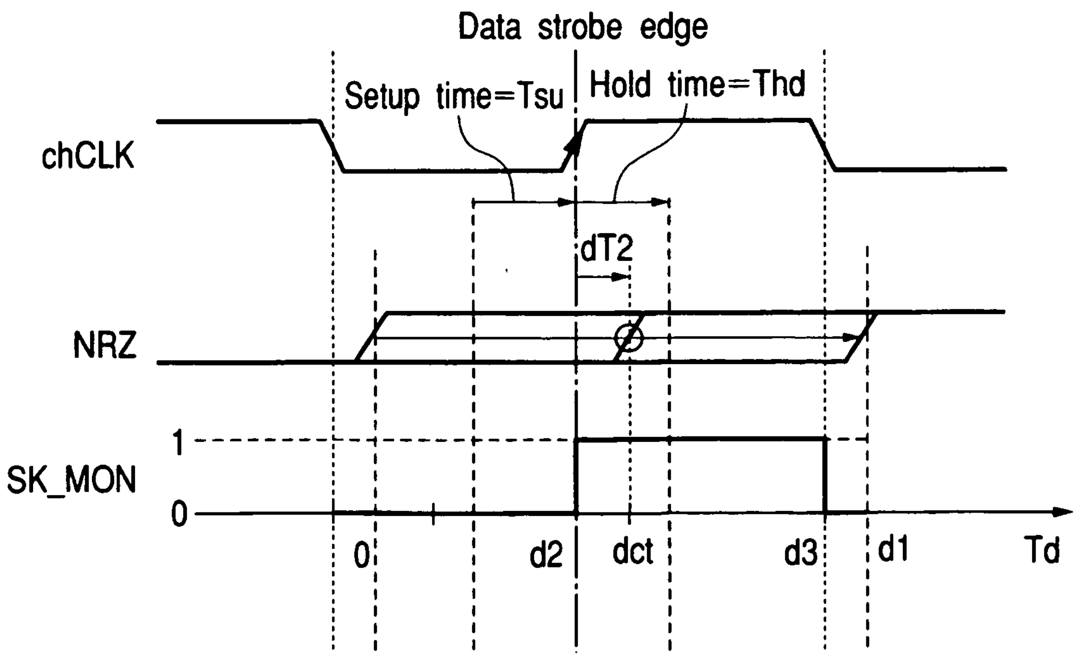
Data strobe edge
Setup time=Tsu
Hold time=Thd
chCLK
dT2
NRZ
1
SK_MON
0
0
d2
dct
d3
d1
Td

FIG. 23

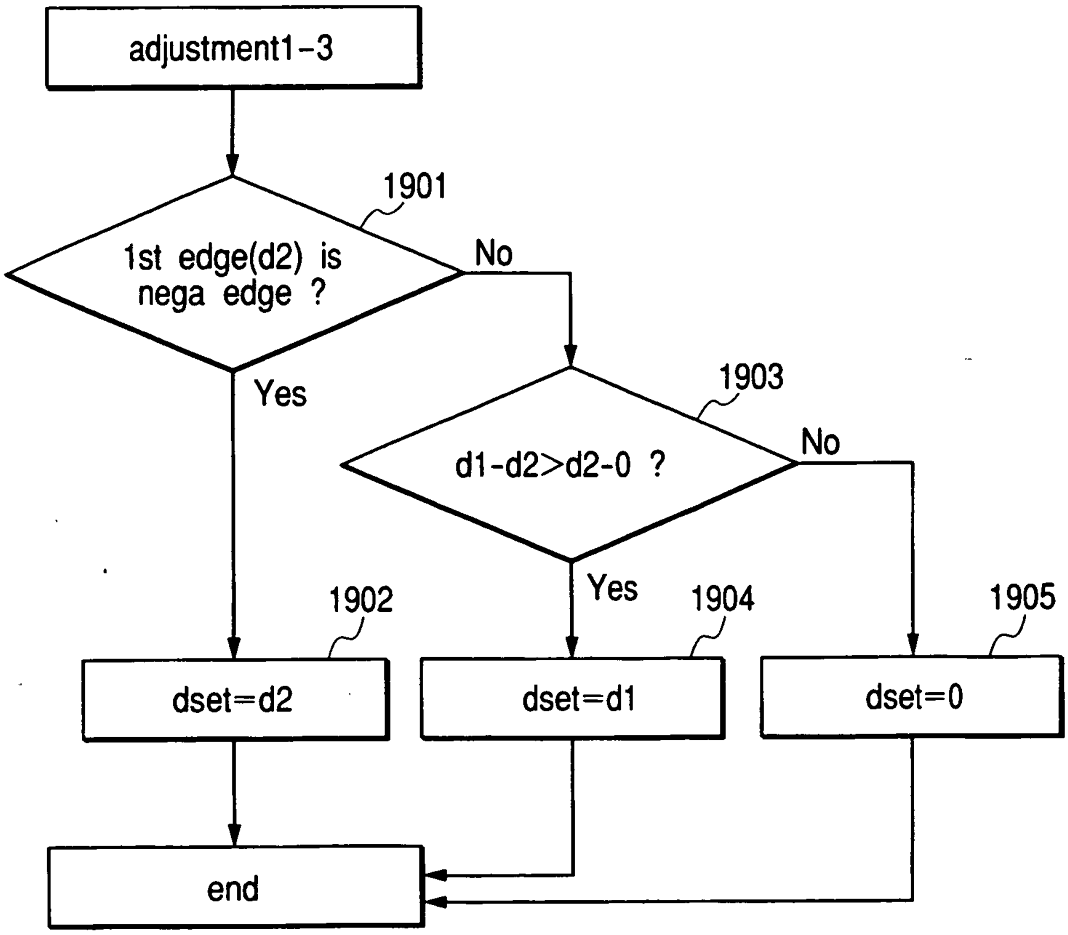
adjustment1-3
1901
1st edge(d2) is nega edge ?
No
Yes
1903
d1-d2>d2-0 ?
No
Yes
1902
1904
1905
dset=d2
dset=d1
dset=0
end

FIG. 24

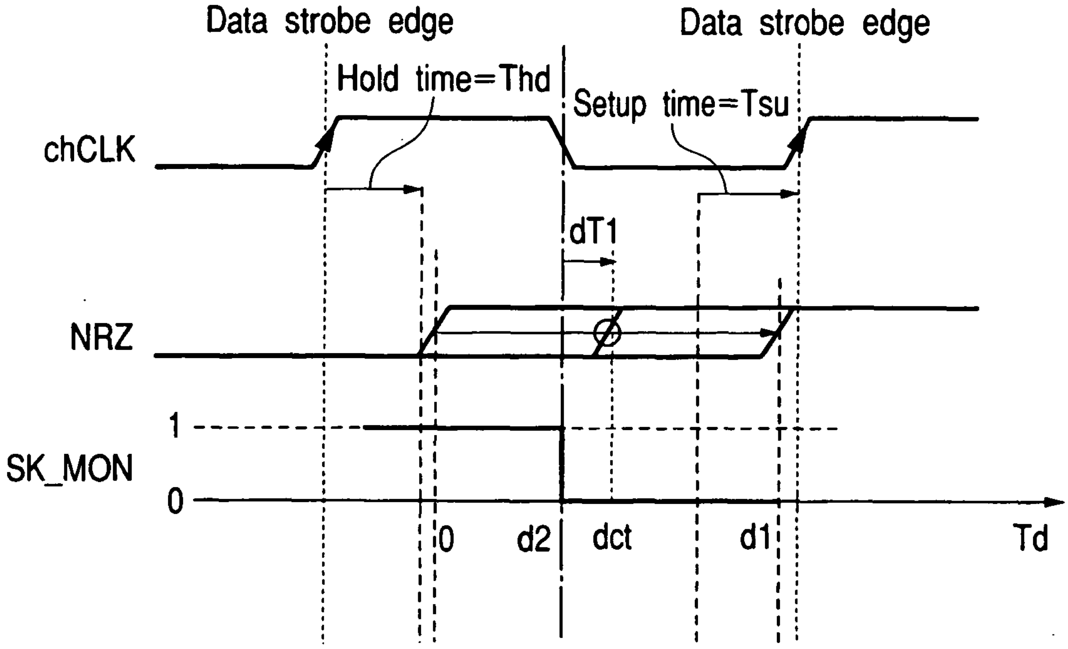
Data strobe edge
Hold time=Thd
Setup time=Tsu
Data strobe edge
chCLK
dT1
NRZ
1
SK_MON
0
0
d2
dct
d1
Td

FIG. 25

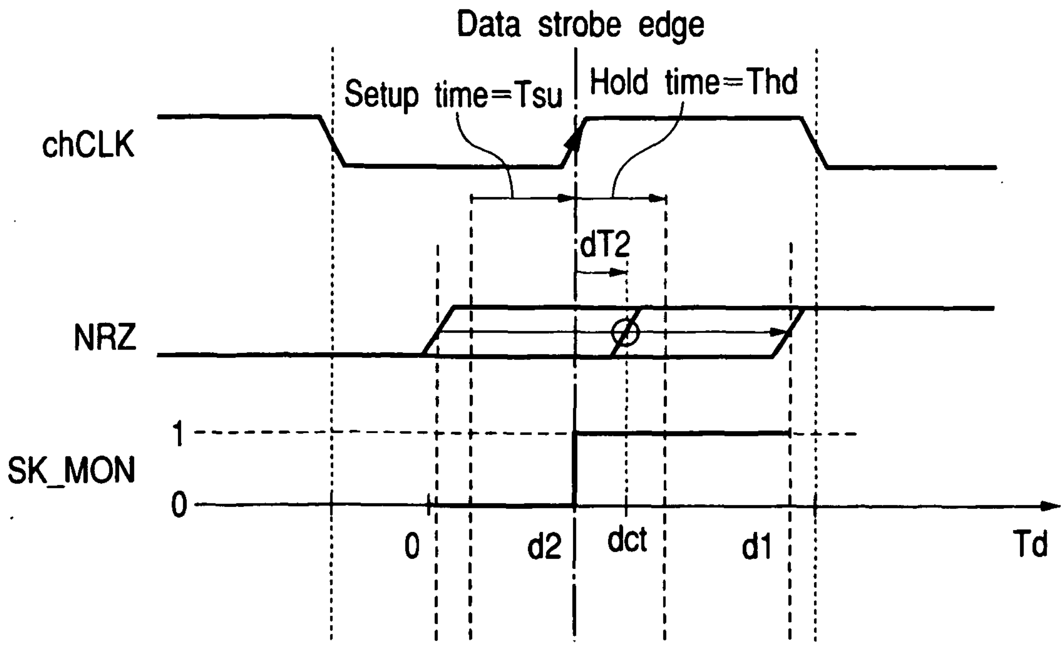
Data strobe edge
Setup time=Tsu
Hold time=Thd
chCLK
dT2
NRZ
1
SK_MON
0
0
d2
dct
d1
Td

FIG. 26

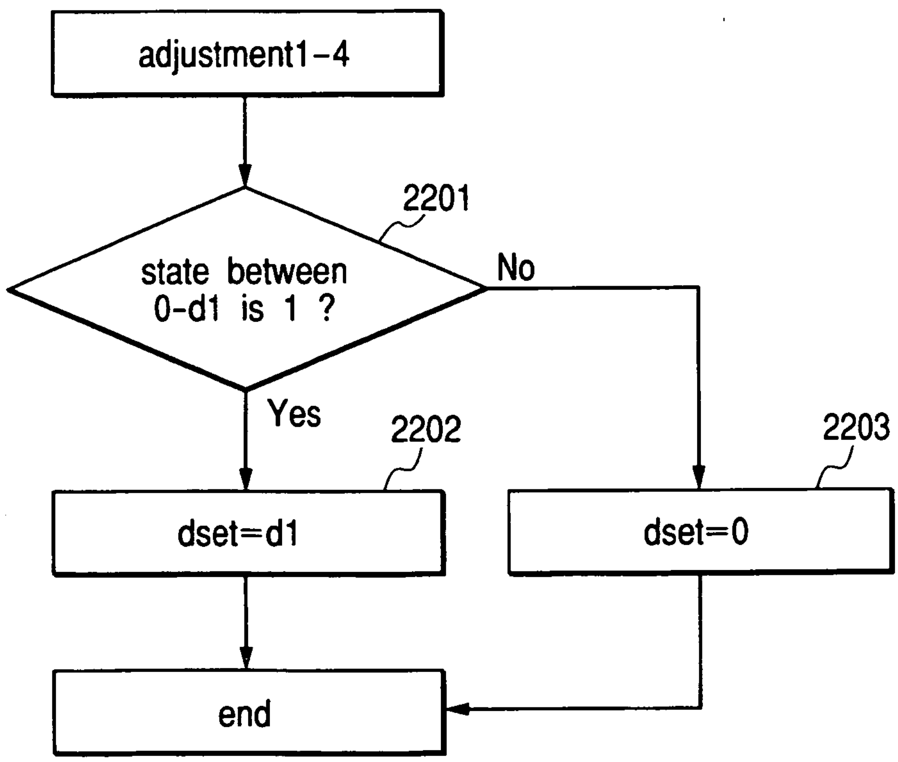
adjustment1-4
2201
state between
0-d1 is 1 ?
No
Yes
2202
2203
dset=d1
dset=0
end

# FIG. 27

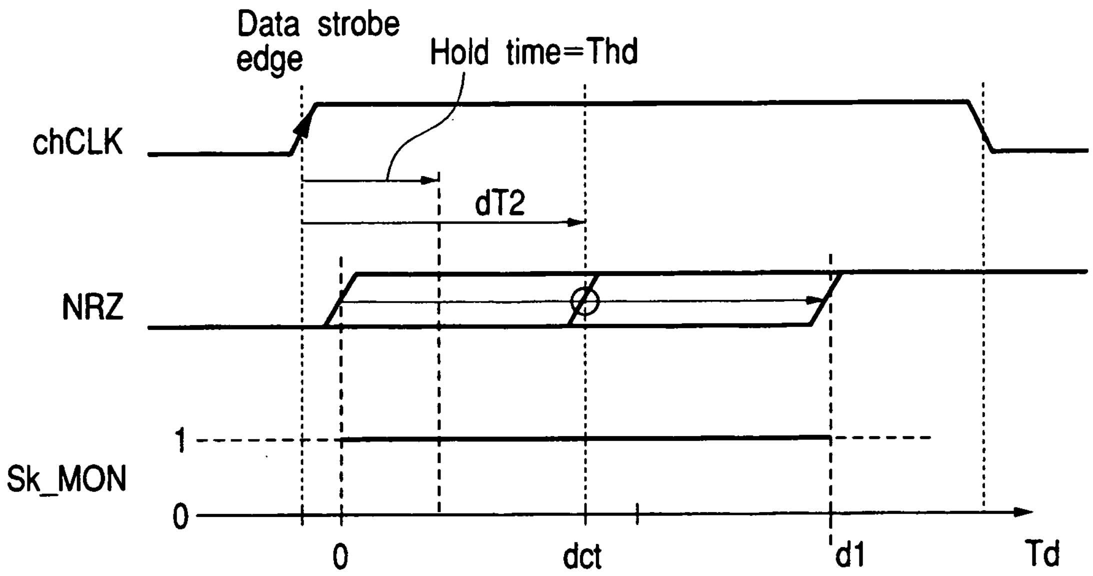
Data strobe edge
Hold time=Thd
chCLK
dT2
NRZ
1
Sk_MON
0
0
dct
d1
Td

# FIG. 28

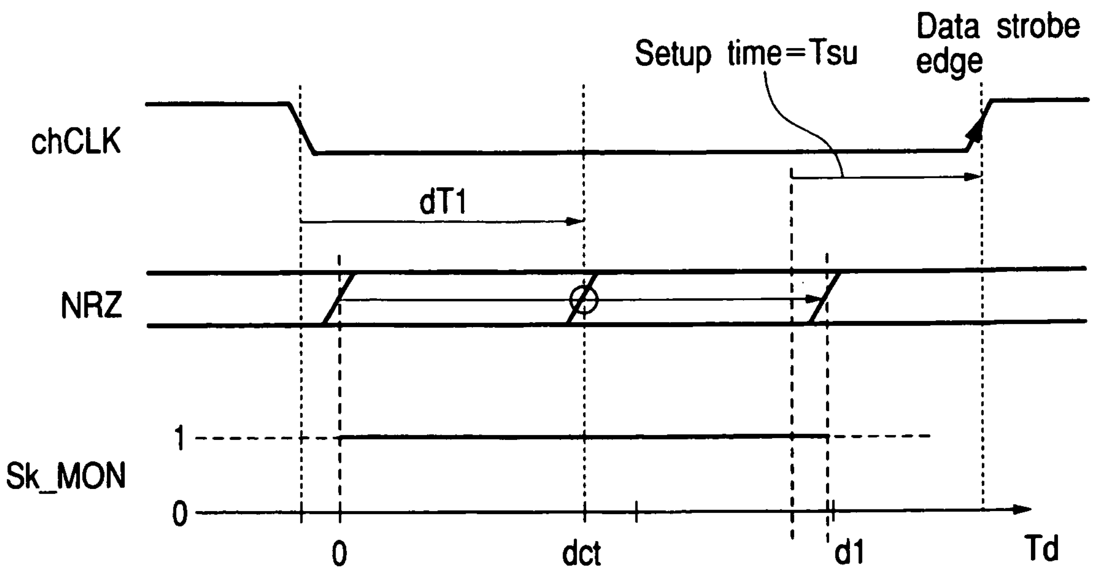
Setup time=Tsu
Data strobe edge
chCLK
dT1
NRZ
1
Sk_MON
0
0
dct
d1
Td

FIG. 29

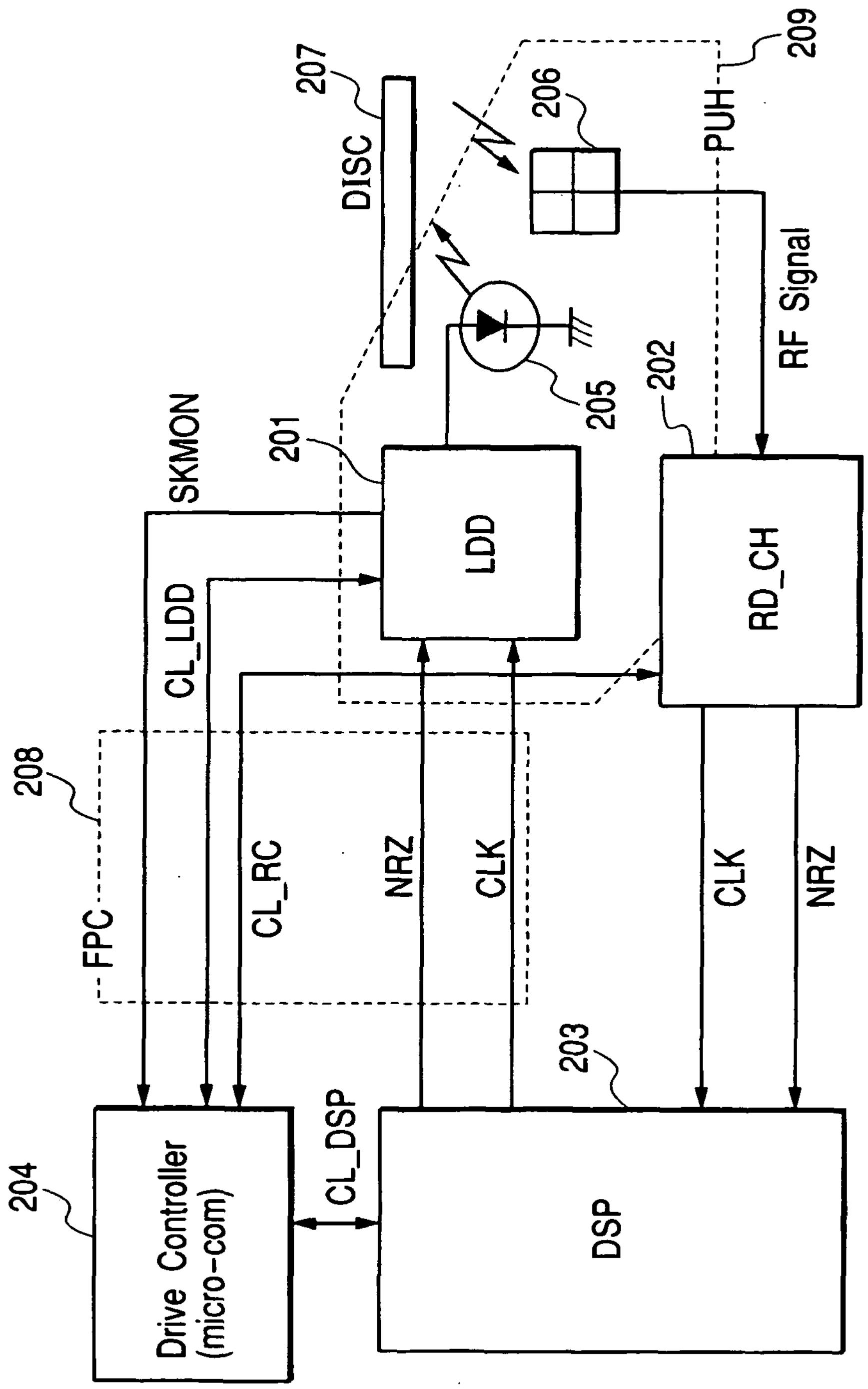

DISC
207
206
209
PUH
RF Signal
205
202
201
SKMON
LDD
RD_CH
CL_LDD
208
FPC
CL_RC
NRZ
CLK
CLK
NRZ
203
204
Drive Controller
(micro-com)
CL_DSP
DSP

FIG. 30

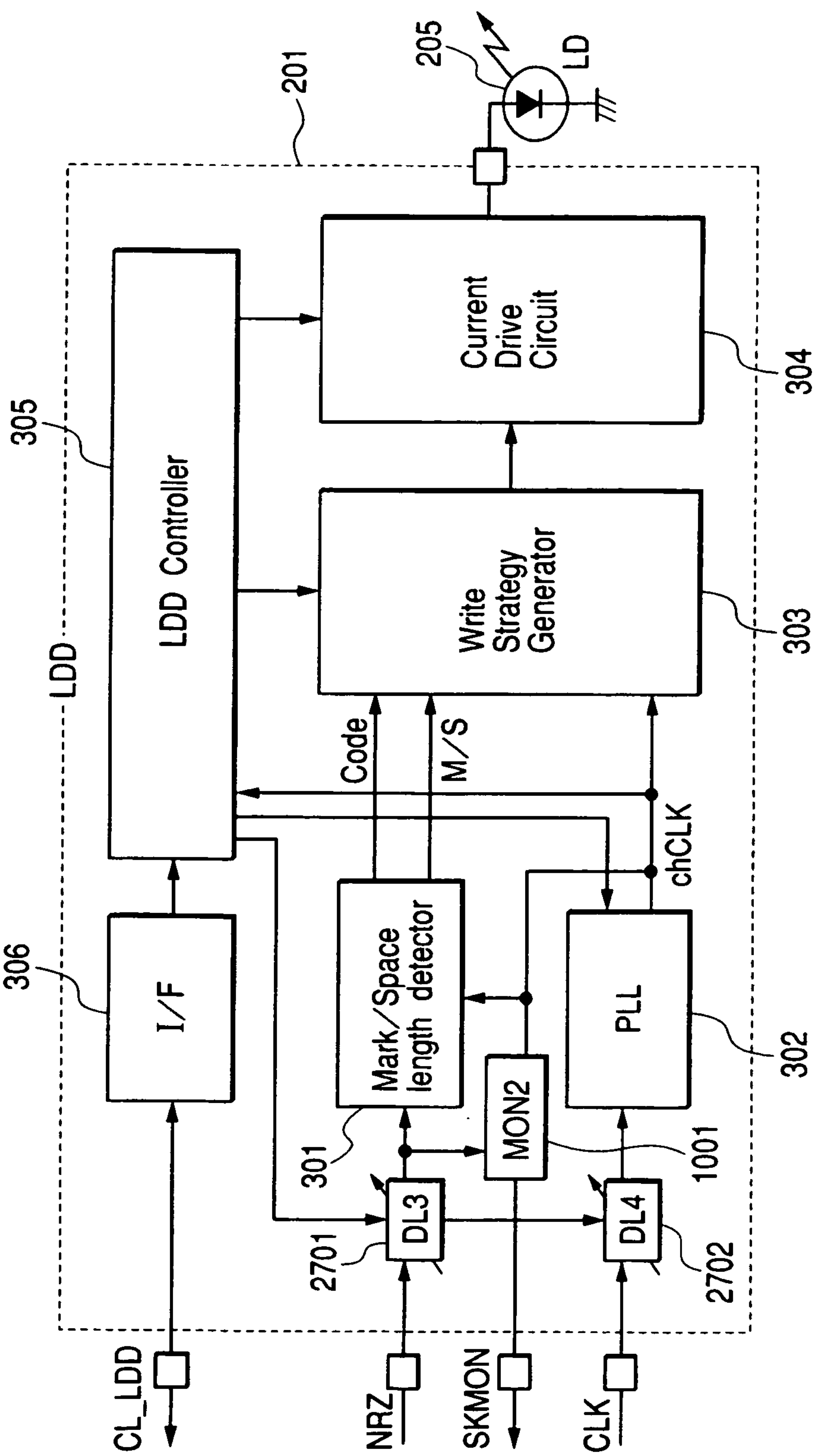

LDD
201
205
LD
305
LDD Controller
Current
Drive
Circuit
304
Write
Strategy
Generator
303
Code
M/S
chCLK
306
I/F
Mark/Space
length detector
301
MON2
1001
PLL
302
DL3
2701
DL4
2702
CL_LDD
NRZ
SKMON
CLK

FIG. 31

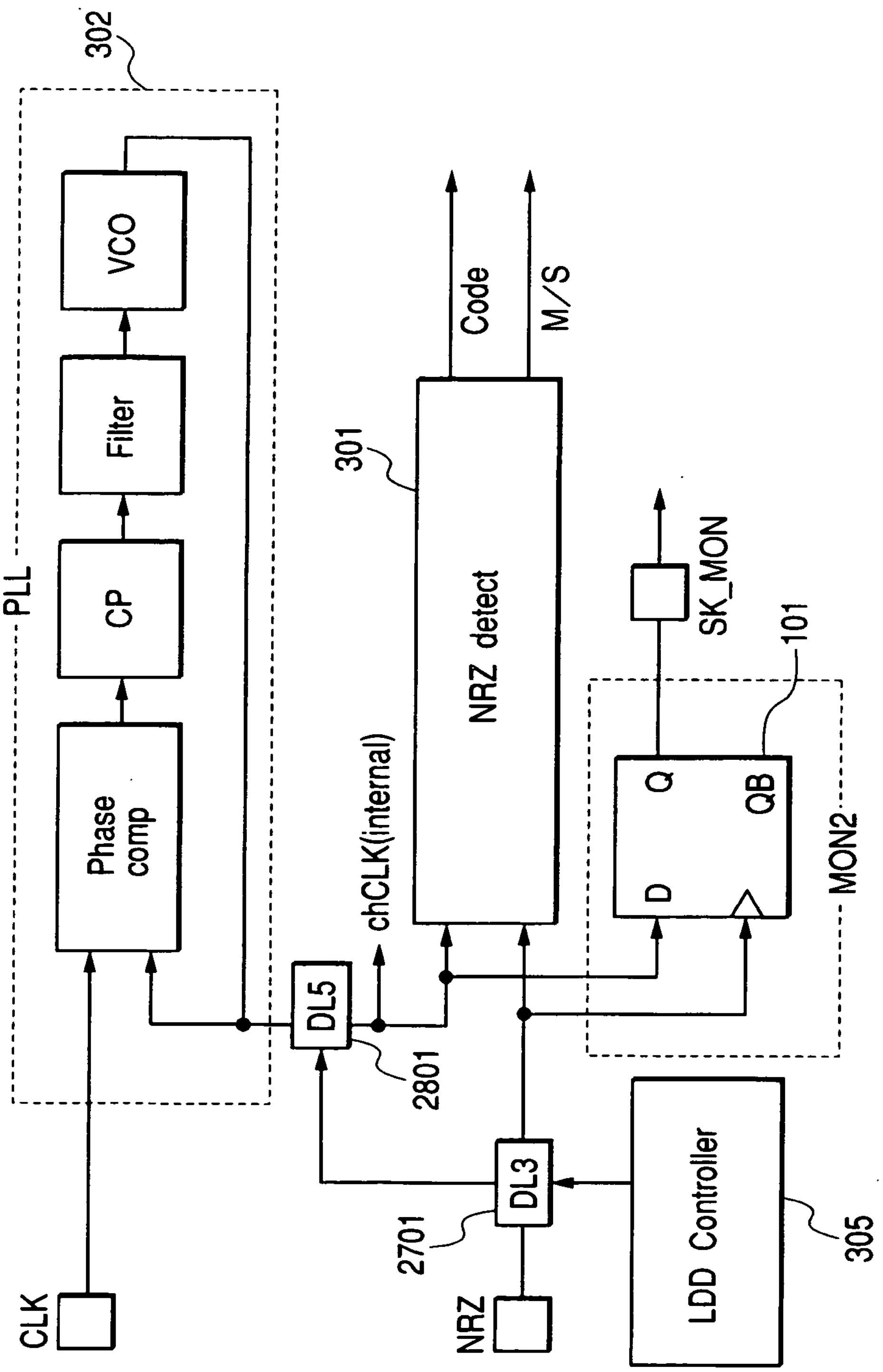
302
PLL
Phase comp
CP
Filter
VCO
DL5
2801
chCLK(internal)
301
NRZ detect
Code
M/S
MON2
D
Q
QB
101
SK_MON
CLK
NRZ
DL3
2701
LDD Controller
305

FIG. 32

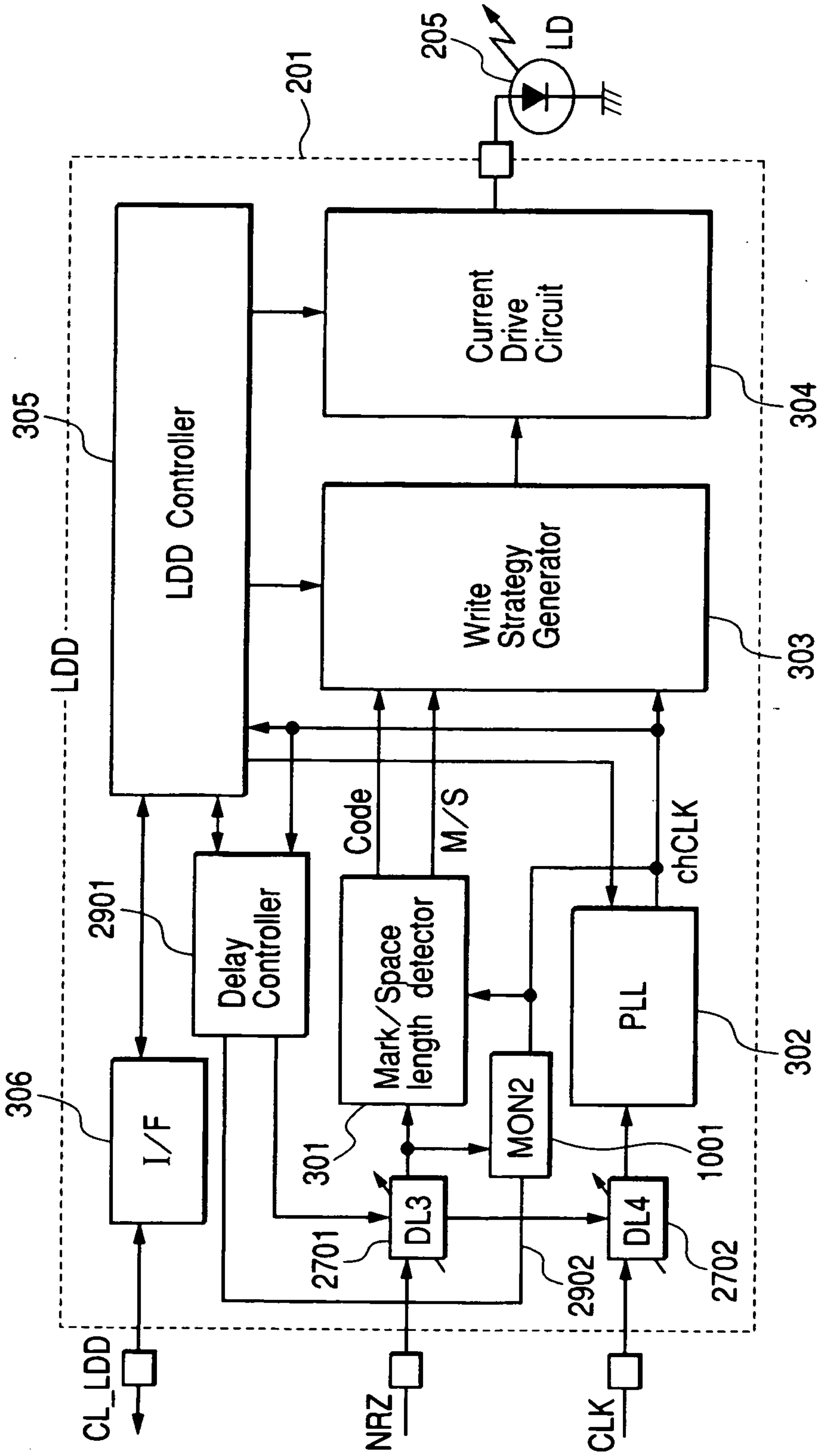
201
205
LD
LDD
305
LDD Controller
Current
Drive
Circuit
304
Write
Strategy
Generator
303
Code
M/S
chCLK
2901
Delay
Controller
Mark/Space
length detector
PLL
302
306
I/F
MON2
1001
301
DL3
DL4
2701
2902
2702
CL_LDD
NRZ
CLK

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11283249 A
- US 6483791 B
- US 6414932 B